# EUROPEAN PATENT SPECIFICATION

(11) **EP 3 932 273 B1**
(45) Date of publication and mention of the grant of the patent: **25.10.2023**
(21) Application number: 20766076.2
(22) Date of filing: 14.02.2020
(51) Int. Cl.: A47J 44/00, A23L 5/00, B25J 13/00, G05B 19/042

(54) **COOKING ROBOT, COOKING ROBOT CONTROL DEVICE, AND CONTROL METHOD**
KOCHROBOTER, KOCHROBOTERSTEUERUNGSVORRICHTUNG UND STEUERUNGSVERFAHREN
ROBOT POUR LA CUISINE, DISPOSITIF DE COMMANDE DE ROBOT POUR LA CUISINE ET PROCÉDÉ DE COMMANDE

(30) Priority: 01.03.2019 JP 2019038070
(43) Date of publication of application: 05.01.2022
(73) Proprietor: Sony Group Corporation, Tokyo 108-0075 (JP)
(72) Inventor: FUJITA, Masahiro, Tokyo 108-0075 (JP); YOSHIDA, Kaoru, Tokyo 141-0022 (JP); SPRANGER, Michael Siegfried, Tokyo 108-0075 (JP)
(74) Representative: D Young & Co LLP
(86) International application number: PCT/JP2020/005704
(87) International publication number: WO 2020/179401

(56) References cited:
- WO-A1-2017/136605
- WO-A1-2018/165105
- JP-A- H03 163 351
- JP-A- 2005 504 259
- JP-A- 2007 155 825
- JP-A- 2017 163 916
- JP-A- 2017 536 247
- US-A- 4 503 502
- US-A1- 2004 172 380
- US-A1- 2016 067 866
- US-A1- 2018 147 718

## Description

### TECHNICAL FIELD

The present technology relates to a cooking robot, a cooking robot control device, and a control method, and in particular to a cooking robot, a cooking robot control device, and a control method capable of improving reproducibility in a case where the same dish as a cook makes is reproduced by the cooking robot.

### BACKGROUND ART

A technique for reproducing a dish made by a cook on the cooking robot side by sensing the movement of the cook during cooking and saving/transmitting data of a sensing result data is being studied. A cooking operation by the cooking robot is implemented on the basis of the sensing result of the same movement as the movement of hands of the cook, for example.

### CITATION LIST

### PATENT DOCUMENT

Patent Document 1: PCT Japanese Translation Patent Publication No. 2017-506169
Patent Document 2: PCT Japanese Translation Patent Publication No. 2017-536247
US 2016/067866 A1 relates to the general field of electronically-aided apparatuses, systems, methods and techniques to conduct the cooking process in a home or a business.

### SUMMARY OF THE INVENTION

### PROBLEMS TO BE SOLVED BY THE INVENTION

Reproduction of the dish as intended by the cook has been practically difficult by a cooking method using conventional cooking robots even if cooking processes are carried out according to a recipe.

This is because the gustation, olfaction, and the like differ depending on the cook and a person who eats foods, and the type, size, texture, production area, and the like of the ingredients differ between the cook side and the reproduction side, the types and abilities of cooking equipment are different, and the cooking environment such as temperature and humidity is different.

The present technology has been made in view of the foregoing, and improves the reproducibility in a case where the same dish as a cook makes is reproduced by a cooking robot.

### SOLUTIONS TO PROBLEMS

A cooking robot according to one aspect of the present technology includes a cooking arm configured to perform a cooking operation for making a dish, and a control unit configured to control the cooking operation performed by the cooking arm using recipe data including a data set in which cooking operation data and sensation data are linked, the cooking operation data describing information regarding an ingredient of the dish and information regarding an operation of a cook in a cooking process using the ingredient, and the sensation data indicating a sensation of the cook measured in conjunction with a progress of the cooking process,
wherein the sensation data comprises flavor information which is configured by gustatory information, the gustatory information being generated by a gustatory information neural network model which has performed learning using gustatory sensor data of the ingredient and the sensation of the cook upon eating the ingredient.

### BRIEF DESCRIPTION OF DRAWINGS

Fig. 1 is a diagram illustrating an example of overall processing in a cooking system according to an embodiment of the present technology.
Fig. 2 is a diagram for describing a difference in ingredients used on a chef side and a reproduction side.
Fig. 3 is a diagram illustrating an example of description content of recipe data.
Fig. 4 is a diagram illustrating an example of information contained in a cooking process data set.
Fig. 5 is a diagram illustrating an example of configuration elements of flavor.
Fig. 6 is a diagram illustrating a calculation example of gustatory subjective information.
Fig. 7 is a diagram illustrating an example of a chart of the gustatory subjective information.
Fig. 8 is a diagram illustrating an example of recipe data.
Fig. 9 is a diagram illustrating an example of a flow of generating the recipe data.
Fig. 10 is a diagram illustrating an example of a flow of reproducing a dish based on the recipe data.
Fig. 11 is a diagram illustrating a flow on the chef side and a flow on the reproduction side together.
Fig. 12 is a diagram illustrating an example of another description content of the recipe data.
Fig. 13 is a diagram illustrating a configuration example of a cooking system according to an embodiment of the present technology.
Fig. 14 is a diagram illustrating another configuration example of the cooking system.
Fig. 15 is a diagram illustrating an arrangement example of a control device.
Fig. 16 is a diagram illustrating a configuration example around a kitchen where a chef cooks.
Fig. 17 is a diagram illustrating an example of a use state of a gustatory sensor.
Fig. 18 is a block diagram illustrating a configuration example on the chef side.
Fig. 19 is a block diagram illustrating a configuration example of hardware of a data processing device.
Fig. 20 is a block diagram illustrating a functional configuration example of the data processing device.
Fig. 21 is a perspective view illustrating an appearance of a cooking robot.
Fig. 22 is an enlarged view illustrating a situation of cooking arms.
Fig. 23 is a view illustrating an appearance of the cooking arm.
Fig. 24 is a view illustrating an example of movable ranges of respective parts of the cooking arm.
Fig. 25 is a view illustrating an example of connection between the cooking arms and a controller.
Fig. 26 is a block diagram illustrating an example of a configuration of the cooking robot and its surroundings.
Fig. 27 is a block diagram illustrating a functional configuration example of the control device.
Fig. 28 is a block diagram illustrating a configuration example of a flavor information processing unit.
Fig. 29 is a flowchart for describing recipe data generation processing of the data processing device.
Fig. 30 is a flowchart for describing flavor information generation processing performed in step S5 of Fig. 29.
Fig. 31 is a flowchart for describing dish reproduction processing of the control device.
Fig. 32 is a flowchart for describing flavor measurement processing performed in step S36 of Fig. 31.
Fig. 33 is a flowchart for describing flavor adjustment processing performed in step S38 of Fig. 31.
Fig. 34 is a flowchart for describing taste adjustment processing performed in step S61 of Fig. 33.
Fig. 35 is a diagram illustrating an example of planning.
Fig. 36 is a flowchart for describing flavor adjustment processing of the control device.
Fig. 37 is a diagram illustrating an example of determining a flavor.
Fig. 38 is a diagram illustrating an example of determining a flavor using flavor subjective information.
Fig. 39 is a diagram illustrating an example of a model for generating sensor data.
Fig. 40 is a flowchart for describing flavor sensor information correction processing of the control device.
Fig. 41 is a diagram illustrating another configuration example of the cooking system.

### MODE FOR CARRYING OUT THE INVENTION

### <Outline of present technology>

The present technology focuses on a difference between a sensation when a cook makes a dish and a sensation when cooking is performed on the basis of a recipe created by the cook, and links sensation data obtained by converting the sensation of the cook when making the dish into data to data describing ingredients and cooking processes to manage the linked data as recipe data.

Furthermore, the present technology enables a cooking robot side to reproduce a dish having a flavor intended by the cook by adjusting cooking operations of a cooking robot on the basis of the sensation of the cook represented by the sensation data.

Moreover, the present technology implements flexible cooking according to characteristics (attributes, states, or the like) of a person who eats the dish by adjusting the ingredients and the cooking operations, using data sensed during the cooking operations at the reproduction in addition to the sensation data.

Hereinafter, modes for carrying out the present technology will be described. Description will be given in the following order.
1. Generation of recipe data and reproduction of dish in cooking system
2. Recipe data
3. Example of flow of generation of recipe data and reproduction of dish
4. Configuration example of cooking system
5. Operation of cooking system
6. Modification

### <Generation of recipe data and reproduction of dish in cooking system>

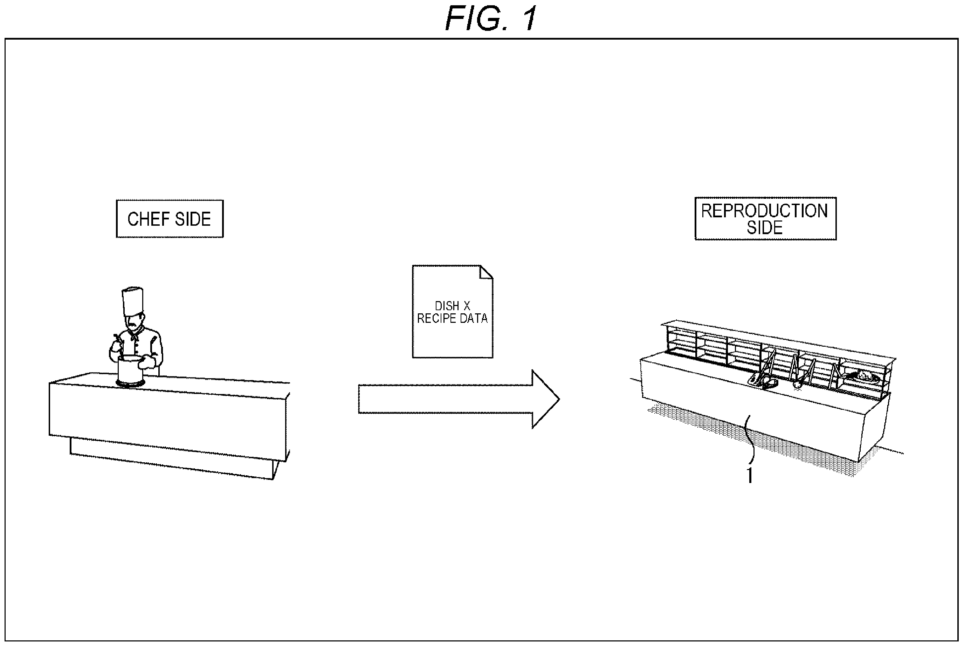

Fig. 1 is a diagram illustrating an example of overall processing in a cooking system according to an embodiment of the present technology.

As illustrated in Fig. 1, the cooking system includes a chef-side configuration for cooking and a reproduction-side configuration for reproducing a dish made by a chef.

The chef-side configuration is, for example, a configuration provided in a restaurant, and the reproduction-side configuration is, for example, a configuration provided in a general household. A cooking robot 1 is prepared as the reproduction-side configuration.

The cooking system of Fig. 1 is a system in which a dish same as the dish made by the chef is reproduced on the cooking robot 1 as the reproduction-side configuration. The cooking robot 1 is a robot including a drive system device such as cooking arms and various sensors and having a cooking function.

Recipe data indicated by the arrow is provided from the chef-side configuration to the reproduction-side configuration including the cooking robot 1. As will be described below in detail, information regarding the dish made by the chef, including the ingredients of the dish, is described in the recipe data.

In the reproduction-side configuration, the dish is reproduced by controlling cooking operations of the cooking robot 1 on the basis of the recipe data. For example, the dish is reproduced by causing the cooking robot 1 to perform the cooking operations for implementing processes same as cooking processes of the chef.

Although a chef is illustrated as a cook who performs cooking, the cooking system of Fig. 1 is applicable to a case where any person cooks as long as the person performs cooking regardless of a name such as a chef or a cook, or a role in a kitchen.

Furthermore, although one chef-side configuration is illustrated in Fig. 1, the cooking system includes a plurality of chef-side configurations respectively provided in a plurality of restaurants. The recipe data of a predetermined dish made by a predetermined chef selected by a person eats the dish reproduced by the cooking robot 1 is provided to the reproduction-side configuration, for example.

Note that the dish means a work product finished after cooking. The cooking means a process of making the dish or an act (work) of making the dish.

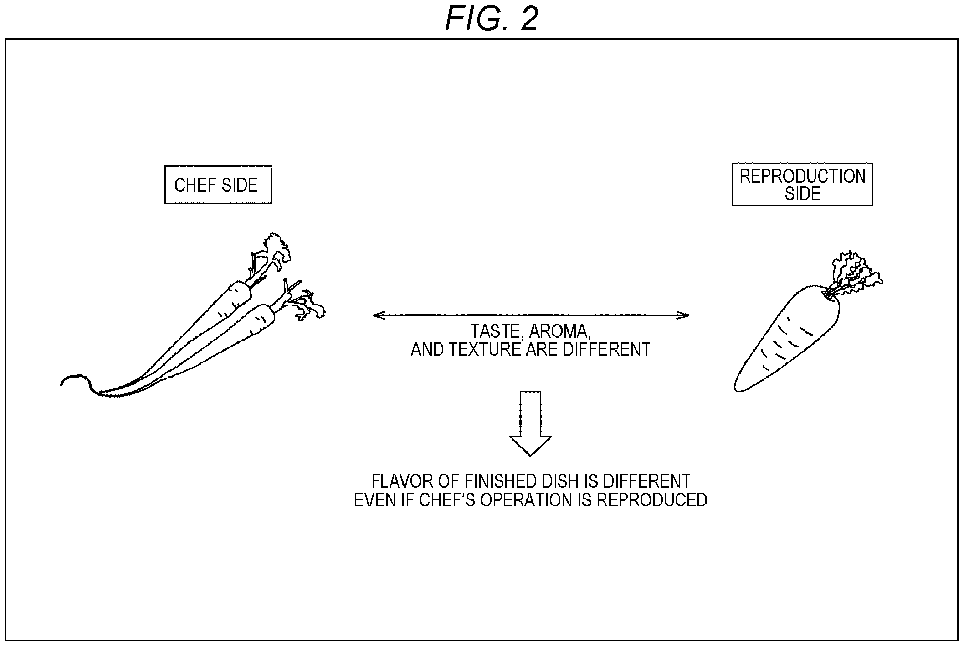

Fig. 2 is a diagram for describing a difference in ingredients used on the chef side and the reproduction side.

In a case where carrots are used in the chef's cooking, for example, information representing use of carrots as ingredients is described in the recipe data. Furthermore, information regarding a cooking process using carrots is described.

A cooking operation using carrots is similarly performed on the reproduction side on the basis of the recipe data.

Here, even if the ingredient is classified as the same "carrot", the carrot prepared by the chef side and the carrot prepared by the reproduction side are different in taste, aroma, and texture due to different types, production areas, harvest times, growing situations, and environments after harvesting. There are no exact same ingredients that are natural products.

Therefore, even if the cooking robot 1 performs exactly the same cooking operation as the chef's operation, the flavor of the dish prepared using carrots will be different. Details of the flavor will be described below.

A plurality of cooking processes is undergone to complete one dish, but even if looking at half-made dishes made by going through one cooking process using carrots, the flavors thereof are different between the chef side and the reproduction side.

Similarly, the flavors of the finished dishes or the half-made dishes are different between the chef side and the reproduction side, depending on the difference in seasonings used in a certain cooking process, the difference in cooking tools such as kitchen knives and pots used for cooking, and the difference in equipment such as thermal power.

Therefore, in the cooking system of Fig. 1, the flavor obtained by the chef as the sensation when making a dish is measured, for example, every time one cooking process is performed. In the recipe data provided to the reproduction side, the sensation data obtained by converting the flavor obtained by the chef into data is described linked with, for example, information regarding ingredients and operations related to one cooking process.

### <Recipe data>

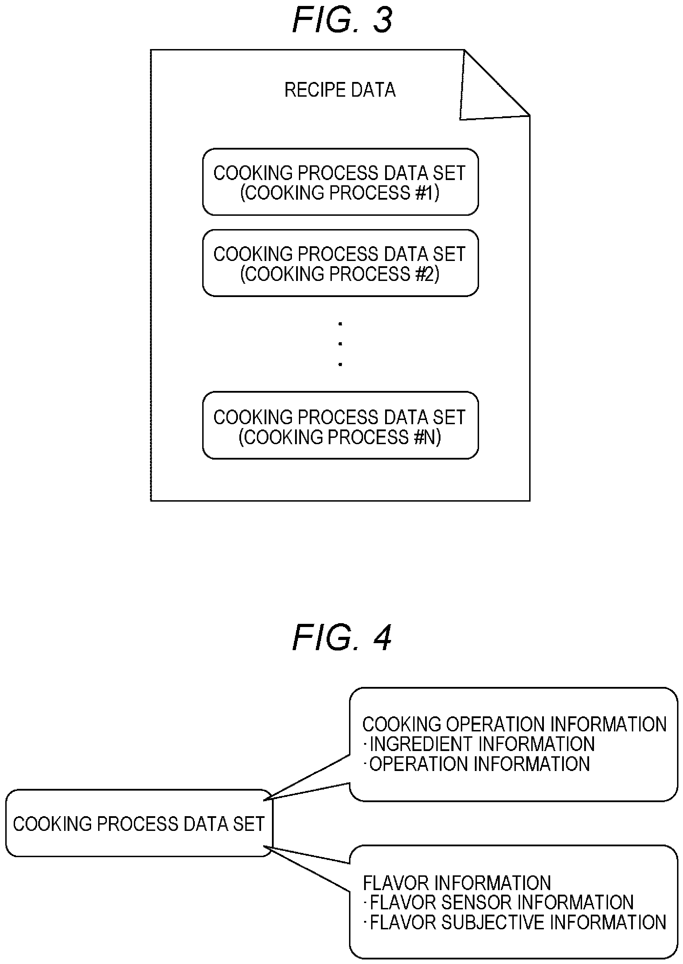

Fig. 3 is a diagram illustrating an example of description content of recipe data.

As illustrated in Fig. 3, one recipe data includes a plurality of cooking process data sets. In the example of Fig. 3, a cooking process data set related to a cooking process #1, a cooking process data set related to a cooking process #2, ..., and a cooking process data set related to a cooking process #N are included.

Thus, in the recipe data, information regarding one cooking process is described as one cooking process data set.

Fig. 4 is a diagram illustrating an example of the information included in the cooking process data set.

As illustrated in the balloons of Fig. 4, the cooking process data set includes cooking operation information that is information regarding cooking operations for realizing the cooking process and flavor information that is information regarding a flavor of an ingredient that has undergone the cooking process.

### 1. Cooking operation information

The cooking operation information includes ingredient information and operation information.

### 1-1. Ingredient information

The ingredient information is information regarding an ingredient used by the chef in the cooking process. The information regarding an ingredient includes information representing a type, an amount, and a size of the ingredient.

For example, in a case where the chef cooks with a carrot in a certain cooking process, information representing that a carrot is used is included in the ingredient information. Information representing various foods used by the chef as ingredients for the dish, such as water and seasonings, is also included in the ingredient information. The food is a variety of stuff that a person can eat.

The ingredients include not only ingredients that have not been cooked at all but also ingredients that have been cooked (prepared) obtained by applying certain cooking. The ingredient information included in the cooking operation information of a certain cooking process includes information of ingredients that have undergone a previous cooking process.

The ingredients used by the chef are recognized by, for example, analyzing an image of the chef who is cooking captured by a camera. The ingredient information is generated on the basis of a recognition result of the ingredients. The image captured by the camera may be a still image or a moving image.

The ingredient information may be registered by the chef or another person such as a staff who supports the chef at the time of generating the recipe data.

### 1-2. Operation information

The operation information is information regarding a movement of the chef in the cooking process. The information regarding a movement of the chef includes information representing a movement of the chef's body at each time, including a type of a cooking tool used by the chef and a hand movement, a standing position of the chef at each time, and the like.

For example, in a case where the chef has cut a certain ingredient with a kitchen knife, the operation information includes information representing that the kitchen knife has been used as a cooking tool, information representing a cutting position, the number of cuttings, a strength of cutting, an angle, a speed, and the like.

Furthermore, in a case where the chef has stirred a pot containing a liquid as an ingredient with a ladle, the operation information includes information representing that the ladle has been used as a cooking tool, information representing a strength of a stirring method, an angle, a speed, a time, and the like.

In a case where the chef has baked a certain ingredient in an oven, the operation information includes information representing that the oven has been used as a cooking tool, heating power of the oven, a baking time, and the like.

In a case where the chef has served the ingredients on dish, the operation information includes information of tableware used for serving the ingredients, a method of arranging the ingredients, the color of the ingredients, and the like.

The movement of the chef is recognized by analyzing an image of the chef who is cooking captured by a camera, or analyzing sensor data measured by a sensor attached to the chef, for example. The operation information is generated on the basis of the recognition result of the movement of the chef.

### 2. Flavor information

As illustrated in Fig. 4, the flavor information includes flavor sensor information and flavor subjective information. The flavor is obtained as a sensation. The flavor information included in the cooking process data set corresponds to the sensation data obtained by converting the sensation of the chef into data.

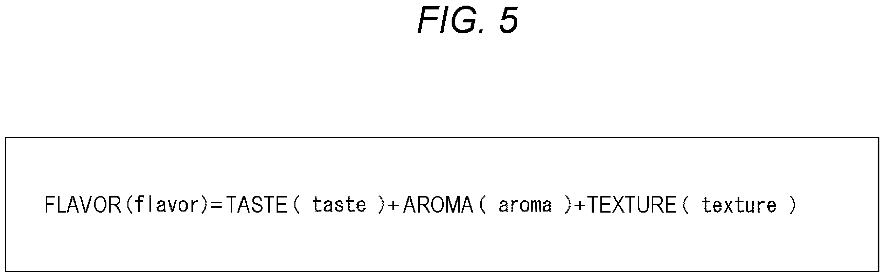

Fig. 5 is a diagram illustrating an example of configuration elements of the flavor.

As illustrated in Fig. 5, deliciousness that a person feels in a brain, that is, the "flavor", is mainly a combination of a taste obtained by a gustation of the person, an aroma obtained by an olfaction of the person, and a texture obtained by a tactile sense of the person.

The flavor also includes an apparent temperature and a color because how a person feels the deliciousness changes depending on the apparent temperature and the color of the ingredients.

Configuration elements of the flavor will be described.

### (1) Taste

The taste includes five kinds of tastes (saltiness, sourness, bitterness, sweetness, and umami) that can be felt by gustatory receptor cells in a tongue and an oral cavity. The saltiness, sourness, bitterness, sweetness, and umami are called basic five flavors.

Furthermore, the taste includes pungency felt not only in the oral cavity but also in vanilloid receptors belonging to the transient receptor potential (TRP) channel family, which is a pain sensation in the whole body, in addition to the basic five tastes. Astringency is also a type of the taste although the astringency overlaps with the bitterness depending on the concentration.

Each taste will be described.

### - Saltiness

Substances that give the saltiness include minerals (Na, K, Fe, Mg, Ca, Cu, Mn, Al, Zn, and the like) that form salts by ionization bonds.

### - Sourness

Substances that give the sourness include acids such as a citric acid and an acetic acid. Generally, the sourness is felt depending on a decrease in pH (for example, about pH3).

### - Sweetness

Substances that give the sweetness include sugars such as sucrose and glucose, lipids, amino acids such as glycine, and artificial sweeteners.

### - Umami

Substances that give the umami include amino acids such as a glutamic acid and an aspartic acid, nucleic acid derivatives such as an inosinic acid, a guanylic acid, and a xanthylic acid, organic acids such as a succinic acid, and salts.

### - Bitterness

Substances that give the bitterness include alkaloids such as caffeine, humulones such as theobromine, nicotine, catechin, and terpenoids, limonine, cucurbitacin, flavanone glycoside naringin, bitter amino acids, bitter peptides, bile acids, and inorganic salts such as calcium salt and magnesium salt.

### - Astringency

Substances that give astringency include polyphenols, tannins, catechins, polyvalent ions (Al, Zn, and Cr), ethanol, and acetone. The astringency is recognized or measured as part of the bitterness.

### - Pungency

A substance that gives the pungency includes capsaicinoid. As biological functions, capsaicin, which is a component of hot peppers and various spices that a person feels hot, and menthol, which is a component of peppermint that a person feels cold, are recognized by warmth receptors of the TRP channel family as pain sensations rather than taste sensations.

### (2) Aroma

The aroma is perceived by volatile low molecular weight organic compounds with a molecular weight of 300 or less that are recognized (bound) by olfactory receptors expressed in a nasal cavity and nasopharynx.

### (3) Texture

The texture is an index called food texture, and is represented by hardness, stickiness, viscosity, cohesiveness, polymer content, water content (moisture), oil content (greasiness), and the like.

### (4) Apparent temperature

The apparent temperature is a temperature felt by human skin. The apparent temperature is not only the temperature of the food itself but also temperature sensations that a surface layer of the skin feels in response to food components, such as refreshing feeling of foods containing volatile substances such as mint, and the warmth feeling of foods containing pungent ingredients such as chili peppers.

### (5) Color

The color of food reflects pigments contained in the food and the components of bitterness and astringency. For example, a plant-derived food includes pigments produced by photosynthesis and components related to the bitterness and astringency of polyphenols. The components included in the food can be estimated from the color of the food by an optical measurement method.

### 2-1. Flavor sensor information

The flavor sensor information configuring the flavor information is sensor data obtained by measuring the flavor of an ingredient with a sensor. The sensor data obtained by measuring the flavor of the ingredient that has not been cooked by the sensor may be included in the flavor information as the flavor sensor information.

Since the flavor is configured by the taste, aroma, texture, apparent temperature, and color, the flavor sensor information includes sensor data related to the taste, sensor data related to the aroma, sensor data related to the texture, sensor data related to the apparent temperature, and sensor data related to the color. All the sensor data may be included in the flavor sensor information or any sensor data may not be included in the flavor sensor information.

Respective sensor data configuring the flavor sensor information are referred to as gustatory sensor data, olfaction sensor data, texture sensor data, apparent temperature sensor data, and color sensor data.

The gustatory sensor data is sensor data measured by the gustatory sensor. The gustatory sensor data is configured by at least one parameter of a saltiness sensor value, a sourness sensor value, a bitterness sensor value, a sweetness sensor value, an umami sensor value, a pungent sensor value, and an astringency sensor value.

The gustatory sensor includes, for example, an artificial lipid membrane-type gustatory sensor using an artificial lipid membrane in a sensor unit. The artificial lipid membrane-type gustatory sensor is a sensor that detects a change in a membrane potential caused by electrostatic and hydrophobic interactions of the lipid membrane with respect to a gustatory substance that is a substance causing the taste to be felt, and outputs the change as a sensor value.

A device capable of converting the respective elements of the saltiness, sourness, bitterness, sweetness, umami, pungency, and astringency configuring the taste of a food into data and outputting the data can use various devices such as a gustatory sensor using a polymer film as the gustatory sensor, instead of the artificial lipid membrane-type gustatory sensor.

The olfaction sensor data is sensor data measured by an olfactory sensor. The olfaction sensor data is configured by a value for each element expressing the aroma, such as spicy aroma, fruity aroma, grassy smell, musty smell (cheesy), citrus aroma, and rose aroma.

The olfactory sensor includes, for example, a sensor provided with innumerable sensors such as a crystal oscillator. A crystal oscillator is used instead of human nasal receptors. The olfactory sensor using the crystal oscillator detects a change in an oscillation frequency of the crystal oscillator of when an aroma component hits the crystal oscillator, and outputs a value expressing the above-described aroma on the basis of a pattern of the change in the oscillation frequency.

A device capable of outputting a value expressing the aroma can use various devices using a sensor formed using various materials such as carbon instead of the human nasal receptors as the olfactory sensor, instead of the sensor using the crystal oscillator.

The texture sensor data is sensor data specified by analyzing an image taken by a camera and sensor data measured by various sensors. The texture sensor data is configured by at least one parameter of information representing hardness, stickiness, viscosity (stress), cohesiveness, polymer content, water content, oil content, and the like.

The hardness, stickiness, viscosity, and cohesiveness are recognized by, for example, analyzing an image of the ingredient cooked by the chef captured by the camera. For example, by analyzing an image of a soup stirred by the chef, values of the hardness, stickiness, viscosity, and cohesiveness can be recognized. These values may be recognized by measuring the stress of when the chef cuts the ingredient with a kitchen knife.

The polymer content, water content, and oil content are measured by, for example, a sensor that irradiates the ingredient with light having a predetermined wavelength and analyzes reflected light to measure the values.

A database in which each ingredient and each parameter of the texture are associated with each other is prepared, and the texture sensor data of each ingredient may be recognized by referring to the database.

The apparent temperature sensor data is sensor data obtained by measuring the temperature of the ingredient with a temperature sensor.

The color sensor data is data specified by analyzing the color of the ingredient from an image captured by a camera.

### 2-2. Flavor subjective information

The flavor subjective information is information representing how a person such as the chef who is cooking feels a subjective flavor. The flavor subjective information is calculated on the basis of the flavor sensor information.

Since the flavor is configured by the taste, aroma, texture, apparent temperature, and color, the flavor subjective information includes subjective information related to the taste, subjective information related to the aroma, subjective information related to the texture, subjective information related to the apparent temperature, and subjective information related to the color. All the subjective information related to the taste, subjective information related to the aroma, subjective information related to the texture, subjective information related to the apparent temperature, and subjective information related to the color may be included in the flavor subjective information or some subjective information may not be included in the flavor subjective information.

Respective pieces of subjective information configuring the flavor subjective information are referred to as gustatory subjective information, olfactory subjective information, texture subjective information, apparent temperature subjective information, and color subjective information.

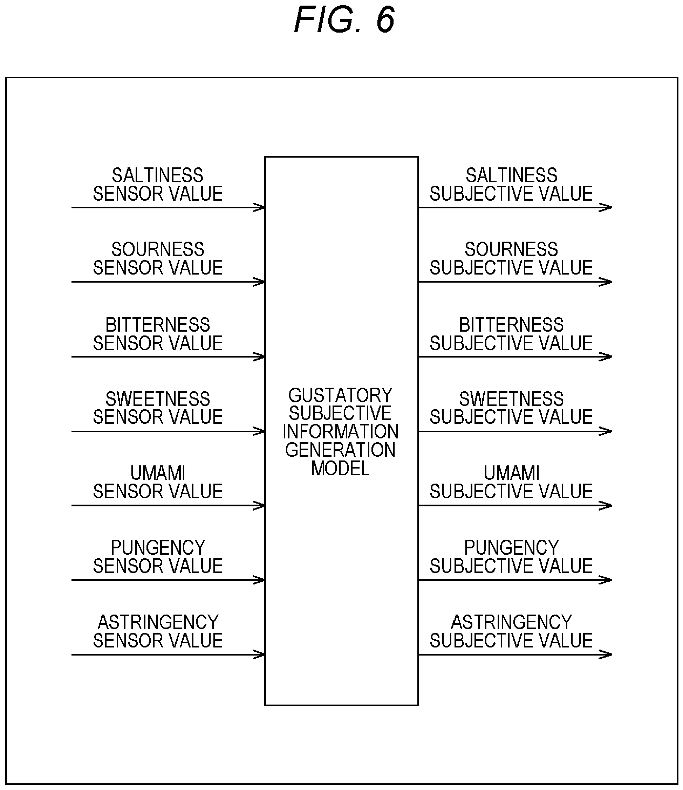

Fig. 6 is a diagram illustrating a calculation example of gustatory subjective information.

As illustrated in Fig. 6, the gustatory subjective information is calculated using the gustatory subjective information generation model that is a model of a neural network generated by deep learning or the like. The gustatory subjective information generation model is generated in advance by performing learning using the gustatory sensor data of a certain ingredient and information (numerical values) representing how the chef who has eaten the ingredient feels the taste, for example.

For example, as illustrated in Fig. 6, in a case of inputting the saltiness sensor value, the sourness sensor value, the bitterness sensor value, the sweetness sensor value, the umami sensor value, the pungent sensor value, and the astringency sensor value that are the gustatory sensor data of a certain ingredient, a saltiness subjective value, a sourness subjective value, a bitterness subjective value, a sweetness subjective value, an umami subjective value, a pungency subjective value, and an astringency subjective value are output from the gustatory subjective information generation model.

The saltiness subjective value is a value representing how the chef feels the saltiness. The sourness subjective value is a value representing how the chef feels the sourness. Similarly, the bitterness subjective value, the sweetness subjective value, the umami subjective value, the pungency subjective value, and the astringency subjective value are values respectively representing how the chef feels the bitterness, sweetness, umami, pungency, and astringency.

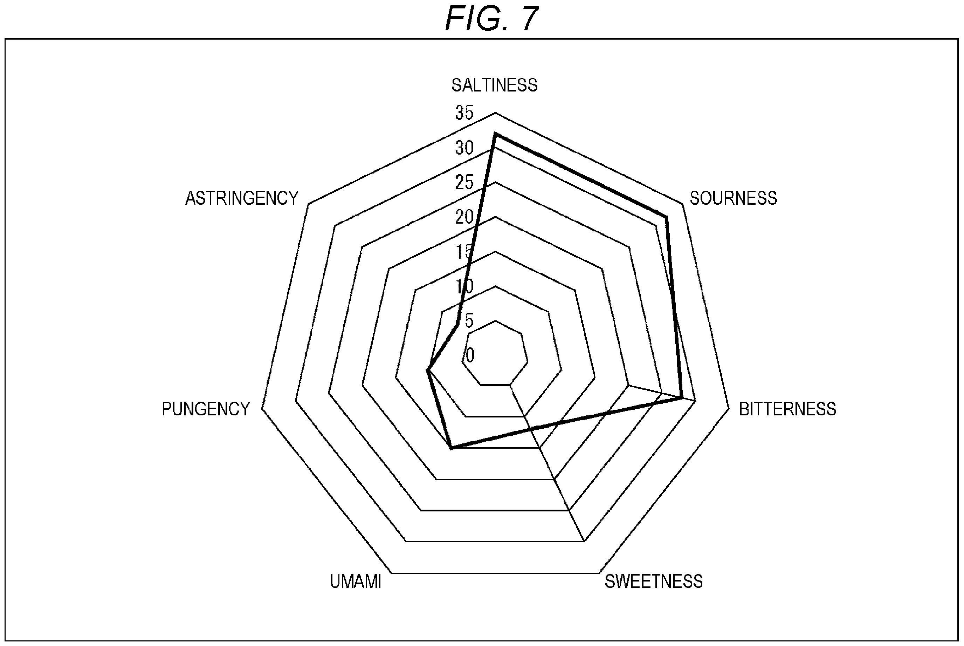

As illustrated in Fig. 7, the gustatory subjective information of a certain ingredient is illustrated as a chart using the saltiness taste subjective value, sourness subjective value, bitterness subjective value, sweetness subjective value, umami subjective value, pungency subjective value, and astringent taste subjective value. Ingredients having similar shapes of the charts of the gustatory subjective information are ingredients having similar taste for the chef when focusing on only the taste of the flavors.

Similarly, the other pieces of subjective information configuring the flavor subjective information are calculated using respective models for generating subjective information.

That is, the olfactory subjective information is calculated by inputting the olfaction sensor data into the olfactory subjective information generation model, and the texture subjective information is calculated by inputting the texture sensor data into the texture subjective information generation model. The apparent temperature subjective information is calculated by inputting the apparent temperature subjective sensor data into the apparent temperature subjective information model, and the color subjective information is calculated by inputting the color sensor data into the color subjective information generation model.

The gustatory subjective information may be calculated on the basis of table information in which the gustatory sensor data of a certain ingredient is associated with the information representing how the chef who has eaten the ingredient feels the taste, instead of using the neural network model. Various methods can be adopted for calculating the flavor subjective information using the flavor sensor information.

As described above, the recipe data is configured by linking (associating) the cooking operation information that is the information regarding the cooking operation for realizing the cooking process to (with) the flavor information that is the information regarding the flavor of the ingredient or the dish measured in conjunction with the progress of the cooking process.

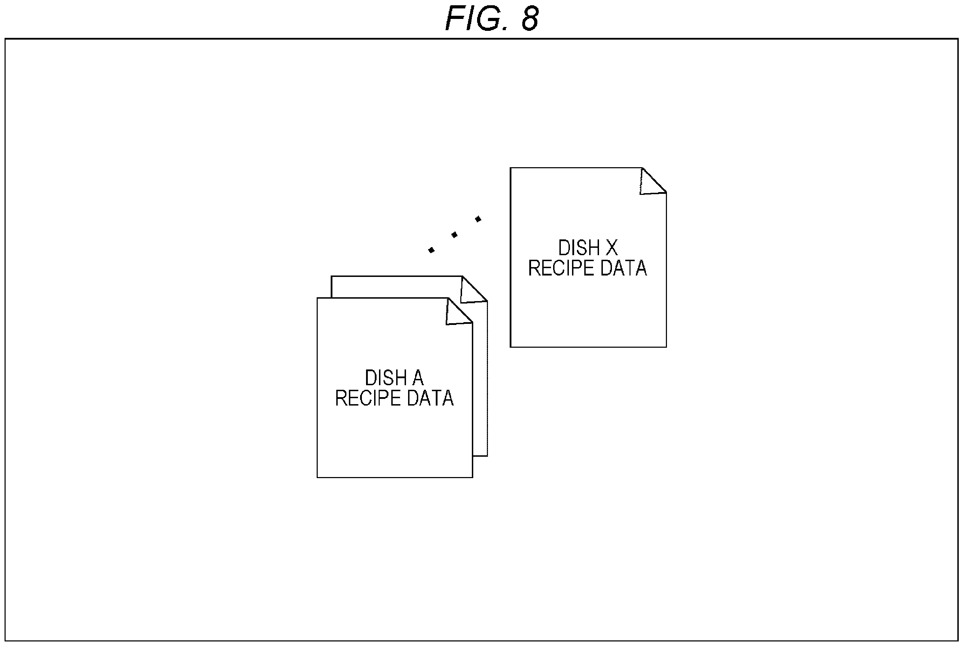

The recipe data including each of the above information is prepared for each dish as illustrated in Fig. 8. Which recipe data is used to reproduce the dish is selected by, for example, a person at a place where the cooking robot 1 is installed.

### <Example of flow of generation of recipe data and reproduction of dish>

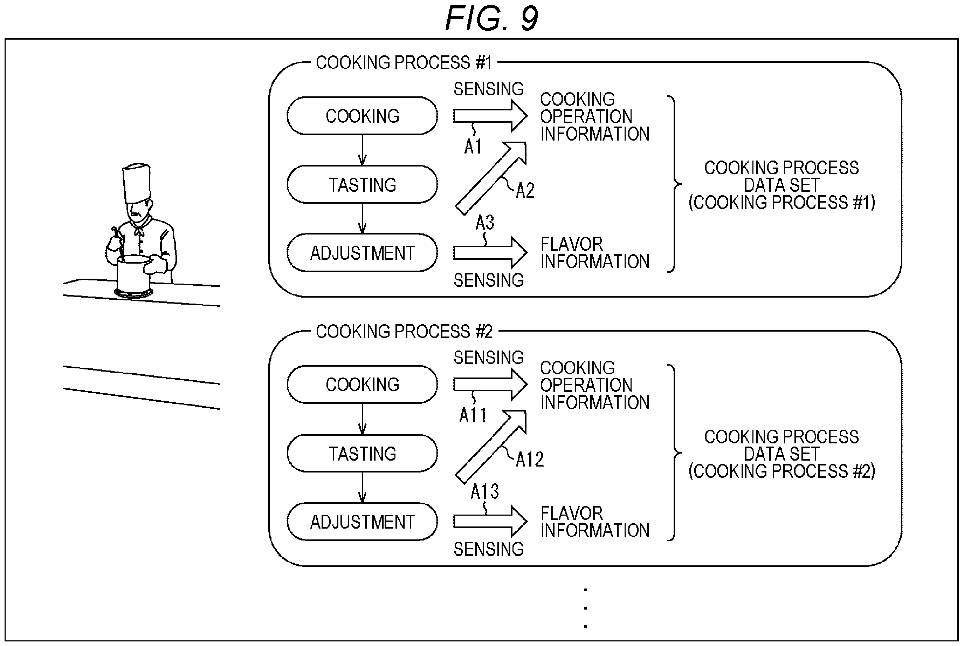

Fig. 9 is a diagram illustrating an example of a flow of generating the recipe data.

As illustrated in Fig. 9, cooking by the chef is usually carried out by repeating cooking using ingredients, tasting the cooked ingredients, and adjusting the flavor, for each cooking process.

The flavor is adjusted by adding work such as adding salt when the saltiness is insufficient, or squeezing lemon juice when the sourness is insufficient, for example. The aroma is adjusted by adding work such as chopping and adding herbs, or heating the ingredients, for example. The texture is adjusted by adding work such as beating the ingredients to become tender when the ingredients are hard, or increasing the time for simmering the ingredients, for example.

The cooking operation information configuring the cooking process data set is generated on the basis of sensing results by sensing the operation of the chef who cooks using ingredients and the operation of the chef who adjusts the flavor.

Furthermore, the flavor information is generated on the basis of a sensing result by sensing the flavor of the cooked ingredients.

In the example of Fig. 9, as illustrated by the arrows A1 and A2, the cooking operation information configuring the cooking process data set of the cooking process #1 is generated on the basis of the sensing results of the cooking operation performed by the chef as the cooking process #1 and the operation of the chef for adjusting the flavor.

Furthermore, as illustrated by the arrow A3, the flavor information configuring the cooking process data set of the cooking process #1 is generated on the basis of the sensing result of the flavor of the cooked ingredients by the cooking process #1.

After the cooking process #1 is completed, the cooking process #2, which is the next cooking process" is performed.

Similarly, as illustrated by the arrows All and A12, the cooking operation information configuring the cooking process data set of the cooking process #2 is generated on the basis of the sensing results of the cooking operation performed by the chef as the cooking process #2 and the operation of the chef for adjusting the flavor.

Furthermore, as illustrated by the arrow A13, the flavor information configuring the cooking process data set of the cooking process #2 is generated on the basis of the sensing result of the flavor of the cooked ingredients by the cooking process #2.

One dish is completed through such a plurality of cooking processes. Furthermore, as the dish is completed, the recipe data describing the cooking process data set of each cooking process is generated.

Hereinafter, a case where one cooking process is mainly configured by three cooking operations of cooking, tasting, and adjustment will be described, but the unit of cooking operations included in one cooking process can be arbitrarily set. One cooking process may be configured by cooking operations not involving tasting or post-tasting flavor adjustment or may be configured by the flavor adjustment. In this case as well, the flavor information obtained on the basis of the sensing result by sensing the flavor for each cooking process is included in the cooking process data set.

Timing for sensing the flavor can also be arbitrarily set rather than sensing the flavor each time one cooking process is completed. For example, flavor sensing may be repeated during one cooking process. In this case, the cooking process data set includes time series data of the flavor information.

The flavor information may be included in the cooking process data set together with the information of the cooking operation performed at the timing each time the flavor is measured at arbitrary timing, rather than the flavor information being included in all the cooking process data sets.

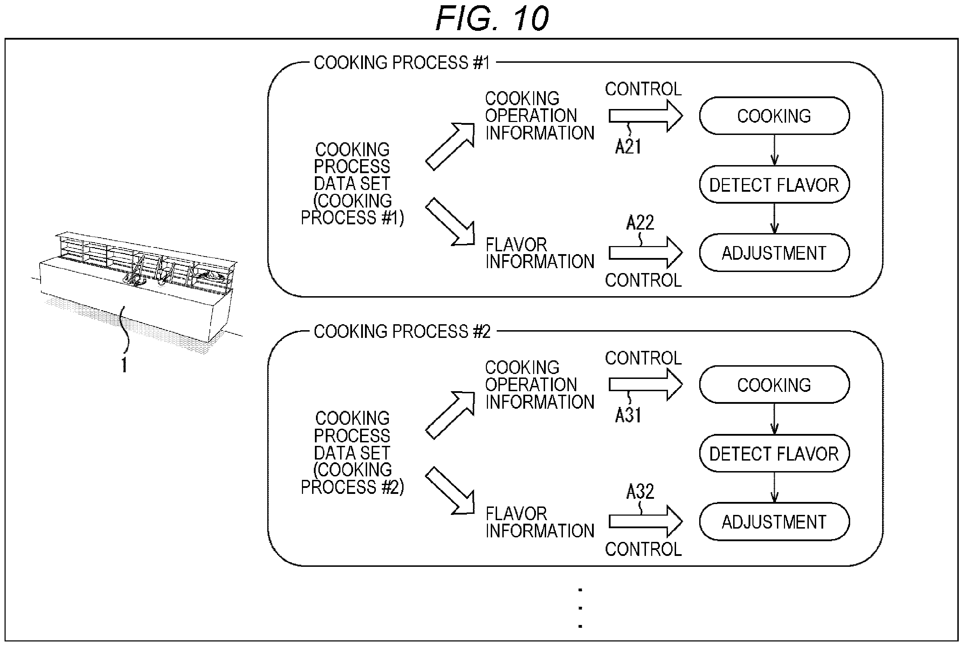

Fig. 10 is a diagram illustrating an example of a flow of reproducing a dish based on the recipe data.

As illustrated in Fig. 10, the reproduction of a dish by the cooking robot 1 is performed by repeating, for each cooking process, cooking on the basis of the cooking operation information included in the cooking process data set described in the recipe data, measuring the flavor of the cooked ingredients, and adjusting the flavor.

The flavor is adjusted by adding work so that the flavor measured by the sensor prepared on the cooking robot 1 side approaches the flavor represented by the flavor information, for example. Details of the flavor adjustment by the cooking robot 1 will be described below.

The flavor measurement and adjustment may be repeated, for example, a plurality of times in a cooking process. That is, each time the adjustment is performed, the flavor is measured for the adjusted ingredients, and the flavor is adjusted on the basis of the measurement result.

In the example of Fig. 10, as illustrated by the arrow A21, the cooking operation of the cooking robot 1 is controlled on the basis of the cooking operation information configuring the cooking process data set of the cooking process #1, and an operation same as the operation of the cooking process #1 of the chef is performed by the cooking robot 1.

After the operation same as the operation of the cooking process #1 of the chef is performed by the cooking robot 1, the flavor of the cooked ingredients is measured, and as illustrated by the arrow A22, adjustment of the flavor of the cooking robot 1 is controlled on the basis of the flavor information configuring the cooking process data set of the cooking process #1.

In a case where the flavor measured by the sensor prepared on the cooking robot 1 side matches the flavor represented by the flavor information, the flavor adjustment is completed and the cooking process #1 is also completed. For example, the flavor measured by the sensor prepared on the cooking robot 1 side and the flavor represented by the flavor information are determined to match when not only the flavors are exactly the same but also when the flavors are similar by a threshold value or more.

After the cooking process #1 is completed, the cooking process #2, which is the next cooking process" is performed.

Similarly, as illustrated by the arrow A31, the cooking operation of the cooking robot 1 is controlled on the basis of the cooking operation information configuring the cooking process data set of the cooking process #2, and an operation same as the operation of the cooking process #2 of the chef is performed by the cooking robot 1.

After the operation same as the operation of the cooking process #2 of the chef is performed by the cooking robot 1, the flavor of the cooked ingredients is measured, and as illustrated by the arrow A32, adjustment of the flavor of the cooking robot 1 is controlled on the basis of the flavor information configuring the cooking process data set of the cooking process #2.

In a case where the flavor measured by the sensor prepared on the cooking robot 1 side matches the flavor represented by the flavor information, the flavor adjustment is completed and the cooking process #2 is also completed.

Through such a plurality of cooking processes, the dish made by the chef is reproduced by the cooking robot 1.

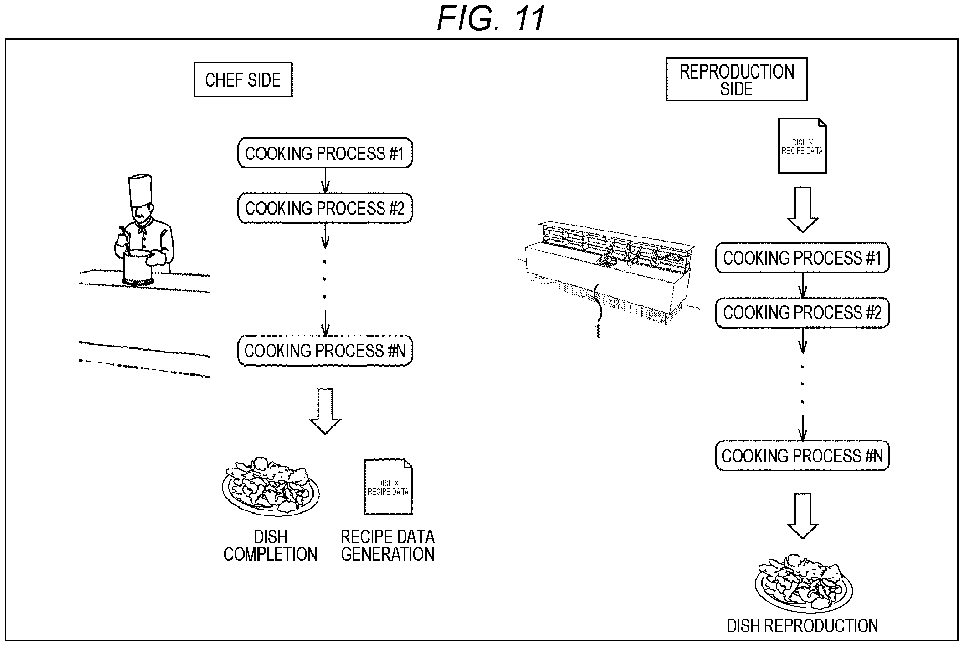

Fig. 11 is a diagram illustrating a flow on the chef side and a flow on the reproduction side together.

As illustrated on the left side of Fig. 11, one dish is completed through a plurality of cooking processes #1 to #N, and the recipe data describing the cooking process data set of each cooking process is generated.

Meanwhile, on the reproduction side, one dish is reproduced through a plurality of cooking processes #1 to #N that is the same as the cooking processes performed on the chef side on the basis of the recipe data generated by the cooking of the chef.

Since the cooking by the cooking robot 1 is performed by adjusting the flavor for each cooking process, the final dish will be a dish with the same or similar flavor to the dish made by the chef. In this way, the dish with the same flavor as the dish made by the chef is reproduced in a highly reproducible form on the basis of the recipe data.

The chef can serve the dish with the same flavor as the dish made by the chef to a person who cannot visit the chef's own restaurant, for example. In addition, the chef can leave the dishes made by the chef in a reproducible form as the recipe data.

Meanwhile, a person who eats the dish reproduced by the cooking robot 1 can eat the dish with the same flavor as the dish prepared by the chef.

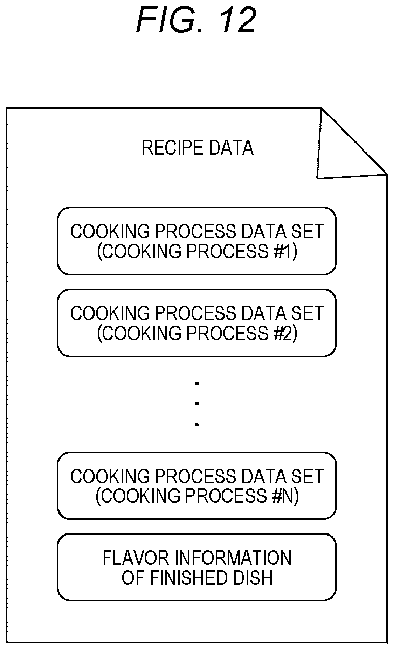

Fig. 12 is a diagram illustrating an example of another description content of the recipe data.

As illustrated in Fig. 12, the recipe data may include flavor information regarding the flavor of the finished dish. In this case, the flavor information regarding the flavor of the finished dish is linked to the overall cooking operation information.

In this way, the associated relationship between the cooking operation information and the flavor information does not have to be one-to-one.

### <Configuration example of cooking system>

### (1) Overall configuration

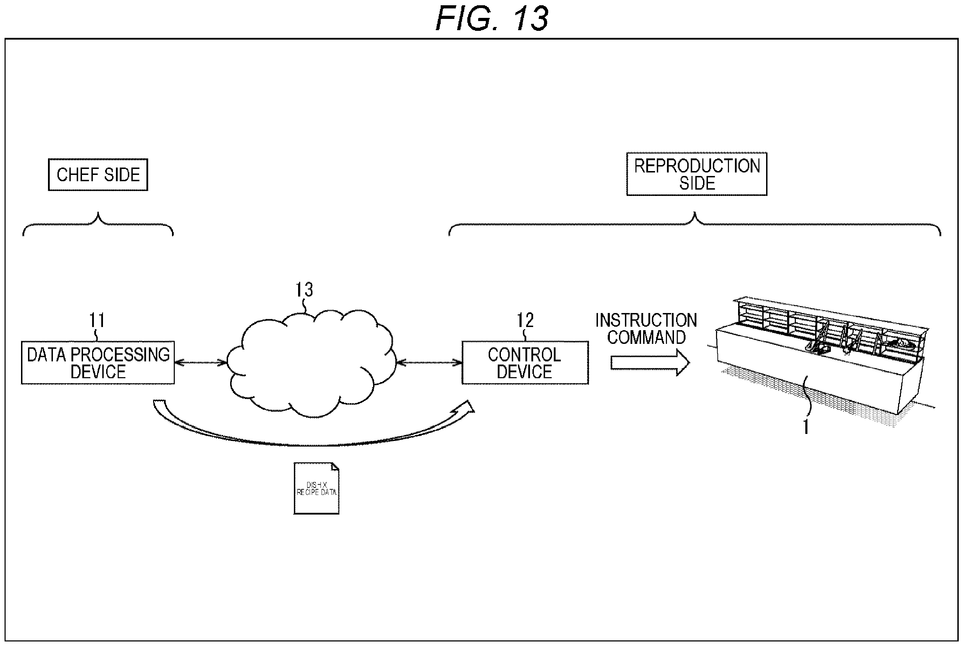

Fig. 13 is a diagram illustrating a configuration example of a cooking system according to an embodiment of the present technology.

As illustrated in Fig. 13, the cooking system is configured by connecting a data processing device 11 provided as the chef-side configuration and a control device 12 provided as the reproduction-side configuration via a network 13 such as the Internet. As described above, the cooking system is provided with a plurality of such chef-side configurations and reproduction-side configurations.

The data processing device 11 is a device that generates the above-described recipe data. The data processing device 11 is configured by a computer or the like. The data processing device 11 transmits, for example, the recipe data of a dish selected by a person who eats a reproduced dish to the control device 12 via the network 13.

The control device 12 is a device that controls the cooking robot 1. The control device 12 is also configured by a computer or the like. The control device 12 receives the recipe data provided by the data processing device 11 and outputs an instruction command on the basis of the description of the recipe data to control the cooking operation of the cooking robot 1.

The cooking robot 1 drives each part such as the cooking arm according to the instruction command supplied from the control device 12 to perform a cooking operation of each cooking process. The instruction command includes torque of a motor provided in the cooking arm, a driving direction, information for controlling a driving amount, and the like.

Until the cooking is completed, the control device 12 sequentially outputs the instruction commands to the cooking robot 1. The dish is finally completed as the cooking robot 1 performs operations according to the instruction commands.

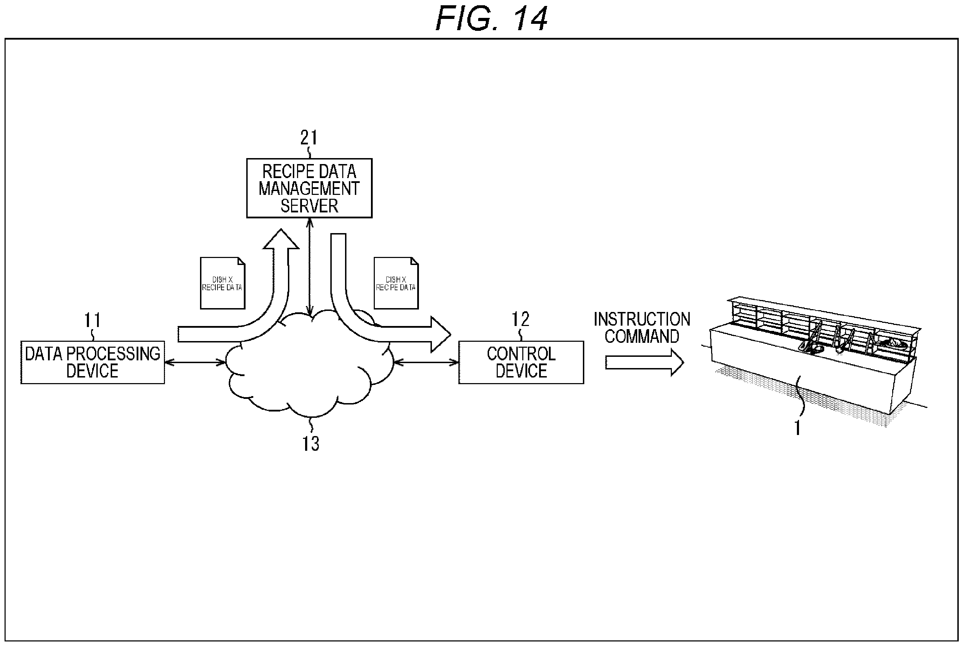

Fig. 14 is a diagram illustrating another configuration example of the cooking system.

As illustrated in Fig. 14, the recipe data may be provided from the chef side to the reproduction side via a server on the network.

A recipe data management server 21 illustrated in Fig. 14 receives the recipe data transmitted from each data processing device 11 and manages the recipe data by causing a database to store the recipe data. The recipe data management server 21 transmits predetermined recipe data to the control device 12 in response to a request transmitted from the control device 12 via the network 13.

The recipe data management server 21 has a function to centrally manage the recipe data of dishes made by chefs of various restaurants and distribute the recipe data in response to a request from the reproduction side.

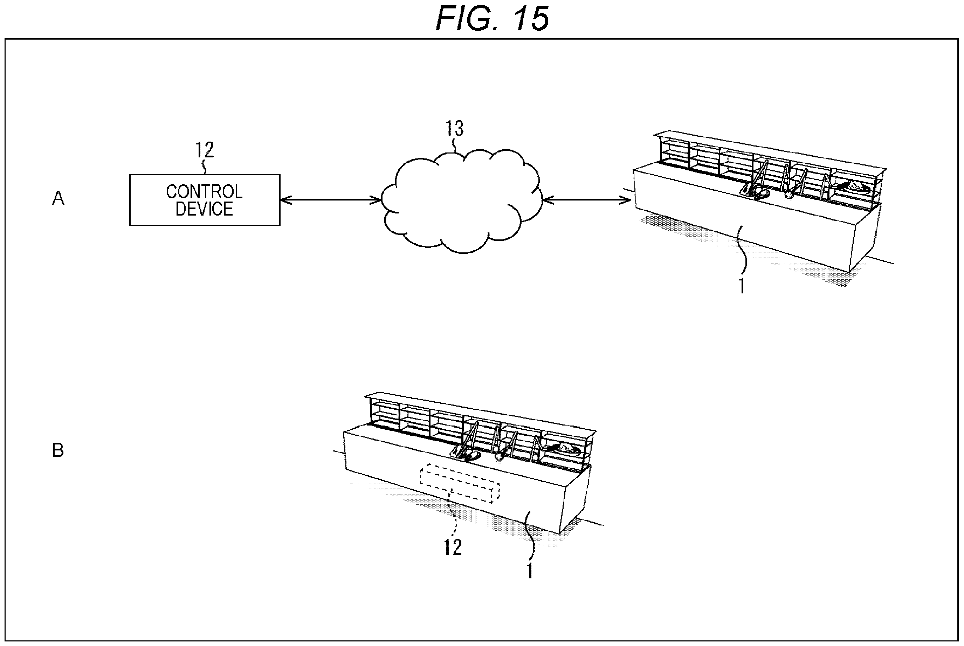

Fig. 15 is a diagram illustrating an arrangement example of the control device 12.

As illustrated in A in Fig. 15, the control device 12 is provided as, for example, a device outside the cooking robot 1. In the example of A in Fig. 15, the control device 12 and the cooking robot 1 are connected via the network 13.

The instruction command transmitted from the control device 12 is received by the cooking robot 1 via the network 13. An image captured by a camera of the cooking robot 1 and various data such as sensor data measured by the sensors provided in the cooking robot 1 are transmitted from the cooking robot 1 to the control device 12 via the network 13.

A plurality of cooking robots 1 may be connected to one control device 12, instead of one cooking robot 1 being connected to one control device 12.

As illustrated in B in Fig. 15, the control device 12 may be provided inside a housing of the cooking robot 1. In this case, the operation of each part of the cooking robot 1 is controlled in accordance with the instruction command generated by the control device 12.

Hereinafter, description will be given on the assumption that the control device 12 is provided as a device outside the cooking robot 1.

### (2) Configuration on chef side

### (2-1) Configuration around kitchen

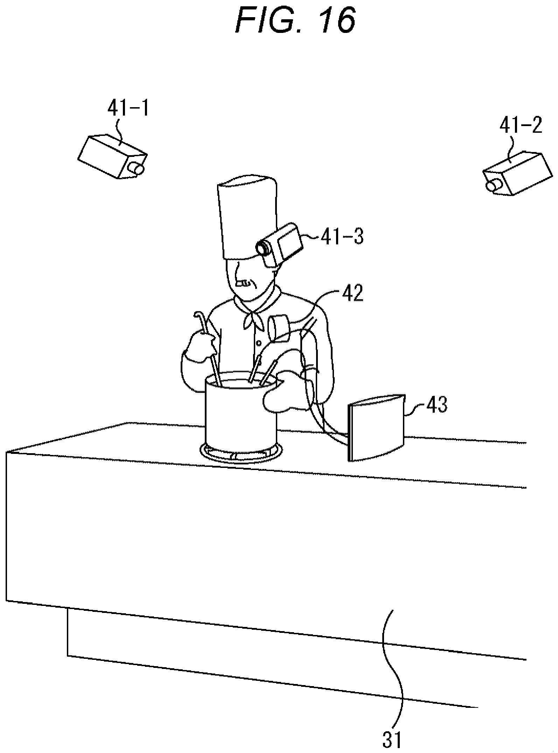

Fig. 16 is a diagram illustrating a configuration example around a kitchen where the chef cooks.

In a neighborhood of a kitchen 31 where the chef cooks, various devices are provided to measure information for use in analyzing the chef's operations and the flavor of the ingredients. Some of these devices are attached to the chef's body.

The devices provided around the kitchen 31 are connected to the data processing device 11 via wired or wireless communication. Each device provided around the kitchen 31 may be connected to the data processing device 11 via a network.

As illustrated in Fig. 16, cameras 41-1 and 41-2 are provided above the kitchen 31. The cameras 41-1 and 41-2 capture the state of the chef cooking and the state on a top plate of the kitchen 31, and transmit images obtained by the capture to the data processing device 11.

A small camera 41-3 is attached to the chef's head. A capture range of the camera 41-3 can be switched according to a direction of a line of sight of the chef. The camera 41-3 captures the state of hands of the chef who is cooking, the state of the ingredients to be cooked, and the state on the top plate of the kitchen 31, and transmits an image obtained by the capture to the data processing device 11.

In this way, the plurality of cameras is provided around the kitchen 31. In a case where there is no need to distinguish the cameras 41-1 to 41-3, they are collectively referred to as camera(s) 41 as appropriate.

An olfactory sensor 42 is attached to the chef's upper body. The olfactory sensor 42 measures the aroma of the ingredients and transmits olfaction sensor data to the data processing device 11.

A gustatory sensor 43 is provided on the top plate of the kitchen 31. The gustatory sensor 43 measures the taste of the ingredients and transmits the gustatory sensor data to the data processing device 11.

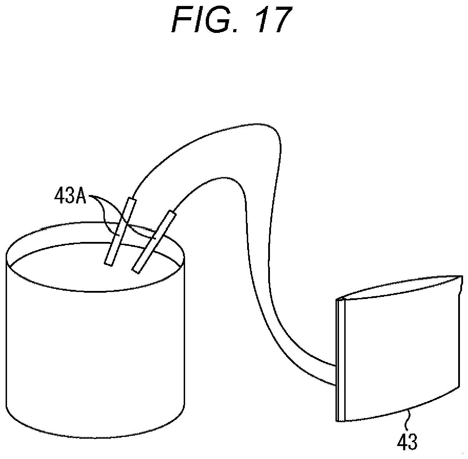

As illustrated in Fig. 17, the gustatory sensor 43 is used by bringing a sensor unit 43A provided at an end of a cable into contact with the ingredient or the like to be cooked. In a case where the gustatory sensor 43 is the above-described artificial lipid membrane-type gustatory sensor, a lipid film is provided on the sensor unit 43A.

Not only the gustatory sensor data but also the texture sensor data and the apparent temperature sensor data among the sensor data configuring the flavor sensor information may be measured by the gustatory sensor 43 and transmitted to the data processing device 11. In this case, the gustatory sensor 43 is provided with functions as a texture sensor and an apparent temperature sensor. For example, the texture sensor data such as polymer content, water content, and oil content may be measured by the gustatory sensor 43.

Various devices other than those illustrated in Fig. 16 are provided around the kitchen 31.

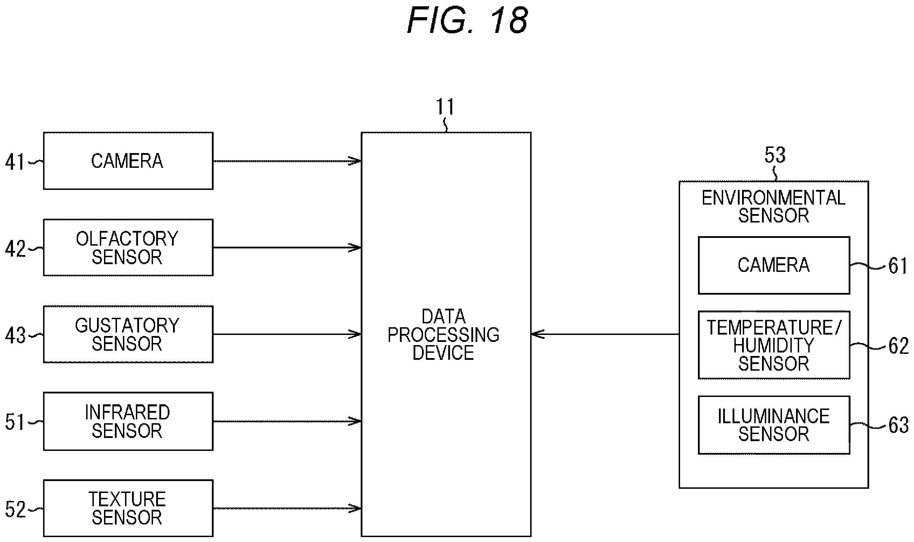

Fig. 18 is a block diagram illustrating a configuration example on the chef side.

The same configuration, of the configuration illustrated in Fig. 18, as the above-described configuration is denoted by the same sign. Overlapping description will be omitted as appropriate.

As illustrated in Fig. 18, the camera 41, the olfactory sensor 42, the gustatory sensor 43, an infrared sensor 51, a texture sensor 52, and an environment sensor 53 are connected to the data processing device 11. The same configuration as the above-described configuration is denoted by the same sign. Overlapping description will be omitted as appropriate.

The infrared sensor 51 outputs IR light and generates an IR image. The IR image generated by the infrared sensor 51 is output to the data processing device 11. Various analyses such as analyses of chef's operations and ingredients may be performed on the basis of the IR image taken by the infrared sensor 51 instead of an image (RGB image) captured by the camera 41.

The texture sensor 52 is configured by sensors that output various sensor data used for texture analysis, such as a hardness sensor, a stress sensor, a water content sensor, and a temperature sensor. A hardness sensor, a stress sensor, a water content sensor, and a temperature sensor may be provided in a cooking tool such as a kitchen knife, a frying pan, or an oven. The sensor data measured by the texture sensor 52 is output to the data processing device 11.

The environment sensor 53 is a sensor that measures a cooking environment that is an environment of a space such as a kitchen where the chef cooks. In the example of Fig. 18, the environment sensor 53 includes a camera 61, a temperature/humidity sensor 62, and an illuminance sensor 63.

The camera 61 outputs a captured image of the cooking space to the data processing device 11. By analyzing the captured image of the cooking space, the color (brightness, hue, and saturation) of the cooking space is measured, for example.

The temperature/humidity sensor 62 measures the temperature and humidity of the chef-side space and outputs information representing measurement results to the data processing device 11.

The illuminance sensor 63 measures the brightness of the chef-side space and outputs information representing a measurement result to the data processing device 11.

The color, temperature, and brightness of the space where a dish is eaten affect how a person perceives the flavor. For example, in a case of considering the seasoning of the same dish, the higher the temperature, the more light taste is preferred, and the lower the temperature, the stronger taste is preferred.

The cooking environment that may affect how a person perceives the flavor may be measured at the time of cooking and included in the recipe data as environment information.

On the reproduction side, the environment such as the color, temperature, and brightness of a room where a person eats the dish is adjusted to become the same environment as the cooking environment represented by the environment information included in the recipe data.

Thereby, how a person feels the flavor when eating the reproduced dish can approach how the chef feels at the cooking.

Various types of information that may affect how the flavor is perceived, such as the air pressure and noise in the chef-side space, and the season and the time of day during cooking, may be measured by the environment sensor 53 and included in the recipe data as the environment information.

### (2-2) Configuration of data processing device 11

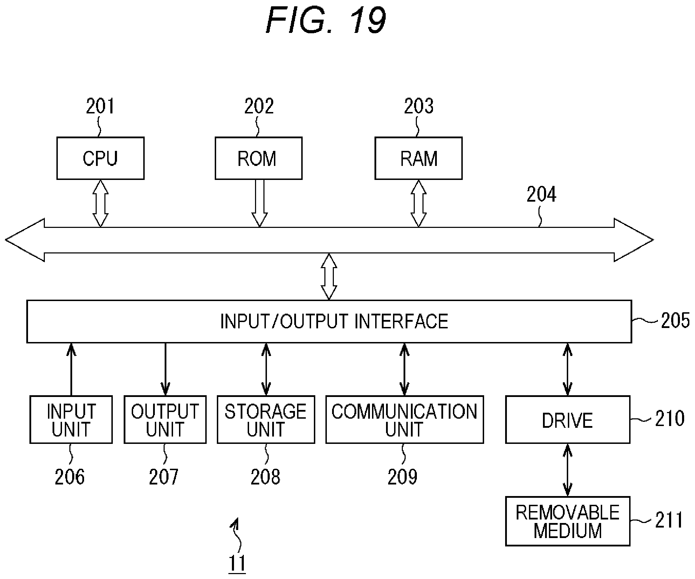

Fig. 19 is a block diagram illustrating a configuration example of hardware of the data processing device 11.

As illustrated in Fig. 19, the data processing device 11 is configured by a computer. A central processing unit (CPU) 201, a read only memory (ROM) 202, and a random access memory (RAM) 203 are mutually connected by a bus 204.

Moreover, an input/output interface 205 is connected to the bus 204. An input unit 206 including a keyboard, a mouse, and the like, and an output unit 207 including a display, a speaker, and the like are connected to the input/output interface 205.

Furthermore, a storage unit 208 including a hard disk, a nonvolatile memory, and the like, a communication unit 209 including a network interface and the like, and a drive 210 for driving a removable medium 211 are connected to the input/output interface 205.

In the computer configured as described above, the CPU 201 loads, for example, a program stored in the storage unit 208 into the RAM 203 via the input/output interface 205 and the bus 204 and executes the program, thereby performing series of processing.

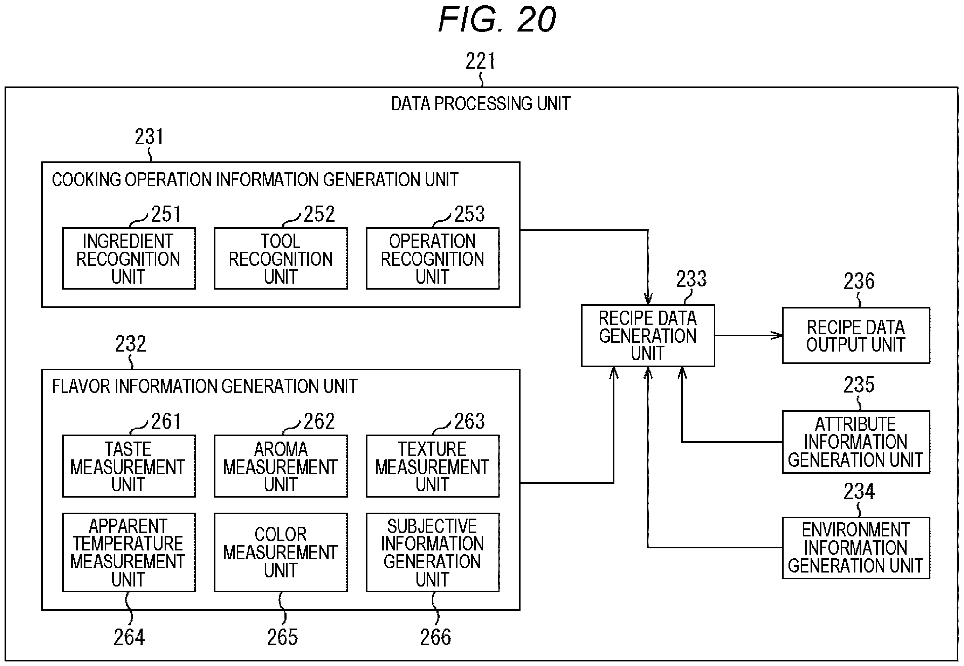

Fig. 20 is a block diagram illustrating a functional configuration example of the data processing device 11.

At least a part of functional units illustrated in Fig. 20 is implemented by the CPU 201 in Fig. 19 executing a predetermined program.

As illustrated in Fig. 20, a data processing unit 221 is implemented in the data processing device 11. The data processing unit 221 includes a cooking operation information generation unit 231, a flavor information generation unit 232, a recipe data generation unit 233, an environment information generation unit 234, an attribute information generation unit 235, and a recipe data output unit 236.

The cooking operation information generation unit 231 includes an ingredient recognition unit 251, a tool recognition unit 252, and an operation recognition unit 253.

The ingredient recognition unit 251 analyzes the image captured by the camera 41 and recognizes the type of the ingredient used by the chef for cooking. The ingredient recognition unit 251 is provided with recognition information such as characteristic information for use in recognizing various types of ingredients.

The tool recognition unit 252 analyzes the image captured by the camera 41 and recognizes the type of the cooking tool used by the chef for cooking. The tool recognition unit 252 is provided with recognition information for use in recognizing various types of cooking tools.

The operation recognition unit 253 analyzes the image captured by the camera 41, the sensor data representing the measurement result of the sensor attached to the chef's body, and the like, and recognizes the operation of the chef who is cooking.

Information representing the recognition result by each unit of the cooking operation information generation unit 231 is supplied to the recipe data generation unit 233.

The flavor information generation unit 232 includes a taste measurement unit 261, an aroma measurement unit 262, a texture measurement unit 263, an apparent temperature measurement unit 264, a color measurement unit 265, and a subjective information generation unit 266.

The taste measurement unit 261 measures the taste of the ingredient by controlling the gustatory sensor 43, and acquires the gustatory sensor data. The ingredient to be measured includes all the ingredients handled by the chef, such as pre-cooked ingredients, cooked ingredients, and finished dishes.

The aroma measurement unit 262 measures the aroma of the ingredient by controlling the olfactory sensor 42, and acquires the olfaction sensor data of the ingredient.

The texture measurement unit 263 measures the texture of the ingredient by analyzing the image captured by the camera 41 and the measurement result by the texture sensor 52, and acquires the texture sensor data of the ingredient.

The apparent temperature measurement unit 264 acquires the apparent temperature sensor data representing the apparent temperature of the ingredient measured by the temperature sensor.

The color measurement unit 265 recognizes the color of the ingredient by analyzing the image captured by the camera 41 and acquires the color sensor data representing the recognition result. In a case where an object to be recognized of the color is a dish finished by serving the ingredients, the color of each part in the whole dish is recognized.

The subjective information generation unit 266 generates the subjective information on the basis of the sensor data acquired by each unit of the taste measurement unit 261 to the color measurement unit 265. The subjective information generation unit 266 performs processing of converting objective data regarding the flavor represented by the sensor data into subjective data representing how the chef feels the flavor.

The subjective information generation unit 266 is provided with information for use in generating the subjective information, such as the neural network described with reference to Fig. 6.

For example, the subjective information generation unit 266 inputs the gustatory sensor data acquired by the taste measurement unit 261 into the gustatory subjective information generation model to generate the gustatory subjective information of the ingredient.

Similarly, the subjective information generation unit 266 inputs the olfaction sensor data acquired by the aroma measurement unit 262 into the olfactory subjective information generation model to generate the olfactory subjective information of the ingredient. The subjective information generation unit 266 inputs the texture sensor data acquired by the texture measurement unit 263 into the texture subjective information model to generate the texture subjective information of the ingredient.

The subjective information generation unit 266 inputs the apparent temperature sensor data acquired by the apparent temperature measurement unit 264 into the apparent temperature subjective information generation model to generate the apparent temperature subjective information of the ingredient. The subjective information generation unit 266 inputs the color sensor data acquired by the color measurement unit 265 into the color subjective information generation model to generate the color subjective information of the ingredient.

The sensor data acquired by each of the taste measurement unit 261 to the color measurement unit 265 and the subjective information generated by the subjective information generation unit 266 are supplied to the recipe data generation unit 233.

The recipe data generation unit 233 generates the cooking operation information on the basis of the information supplied from each unit of the cooking operation information generation unit 231. That is, the recipe data generation unit 233 generates ingredient information on the basis of the recognition result by the ingredient recognition unit 251 and generates the operation information on the basis of the recognition result by the tool recognition unit 252 and the operation recognition unit 253. The recipe data generation unit 233 generates the cooking operation information including the ingredient information and the operation information.

Furthermore, the recipe data generation unit 233 generates the flavor information on the basis of the information supplied from each unit of the flavor information generation unit 232. That is, the recipe data generation unit 233 generates the flavor sensor information on the basis of the sensor data acquired by the taste measurement unit 261 to the color measurement unit 265, and generates the flavor subjective information on the basis of the subjective information generated by the subjective information generation unit 266. The recipe data generation unit 233 generates the flavor information including the flavor sensor information and the flavor subjective information.

The recipe data generation unit 233 generates the cooking process data set by associating the cooking operation information and the flavor information for each cooking process of the chef, for example. The recipe data generation unit 233 collects the cooking process data sets regarding the cooking processes from the first cooking process to the last cooking process of a certain dish, thereby to generate the recipe data describing the plurality of cooking process data sets.

The recipe data generation unit 233 outputs the recipe data generated in this way to the recipe data output unit 236. The recipe data output by the recipe data generation unit 233 includes the environment information generated by the environment information generation unit 234 and attribute information generated by the attribute information generation unit 235 as appropriate.

The environment information generation unit 234 generates the environment information representing the cooking environment on the basis of the measurement result of the environment sensor 53. The environment information generated by the environment information generation unit 234 is output to the recipe data generation unit 233.

The attribute information generation unit 235 generates attribute information representing chef's attributes. The chef's attributes include, for example, the chef's age, gender, nationality, and area of living. Information representing a physical condition of the chef may be included in the attribute information.

The chef's age, gender, nationality, and area of living influence how the chef feels the flavor. That is, it is considered that the flavor subjective information included in the recipe data is influenced by the chef's age, gender, nationality, living area, and the like.

On the reproduction side, in a case of performing processing using the flavor subjective information included in the recipe data, the flavor subjective information is corrected as appropriate according to a difference between the chef's attributes represented by the attribute information and attributes of the person who eats the reproduced dish, and the processing is performed using the corrected flavor subjective information.

For example, suppose the chef is French and the person who eats the reproduced dish is Japanese. In this case, how the chef feels the flavor represented by the flavor subjective information included in the recipe data is how the French feels the flavor, which is different from how the Japanese feels.

The flavor subjective information included in the recipe data is corrected on the basis of information representing how Japanese feels corresponding to how French feels so that Japanese can obtain the same way of feeling when Japanese eats the dish. The information for use in correcting the flavor subjective information is information that associates how French feels and how Japanese feels about the flavor, and is statistically generated and prepared in advance on the reproduction side, for example.

An attribute such as a category of the dish made by the chef, such as French, Japanese, Italian, or Spanish may be included in the attribute information.

Furthermore, attributes of the ingredients and seasonings used for cooking may be included in the attribute information. The attributes of the ingredients include production areas and varieties. The attributes of the seasonings also include production areas and varieties.

In this way, cook attribute information that is attribute information representing the attributes of the chef, food attribute information that is attribute information representing the attributes of dishes and ingredients, and seasoning attribute information that is attribute information representing the attributes of seasonings among the ingredients may be included in the recipe data.

The recipe data output unit 236 controls the communication unit 209 (Fig. 19) and outputs the recipe data generated by the recipe data generation unit 233. The recipe data output from the recipe data output unit 236 is supplied to the control device 12 or the recipe data management server 21 via the network 13.

### (3) Configuration on reproduction side

### (3-1) Configuration of cooking robot 1

### - Appearance of cooking robot 1

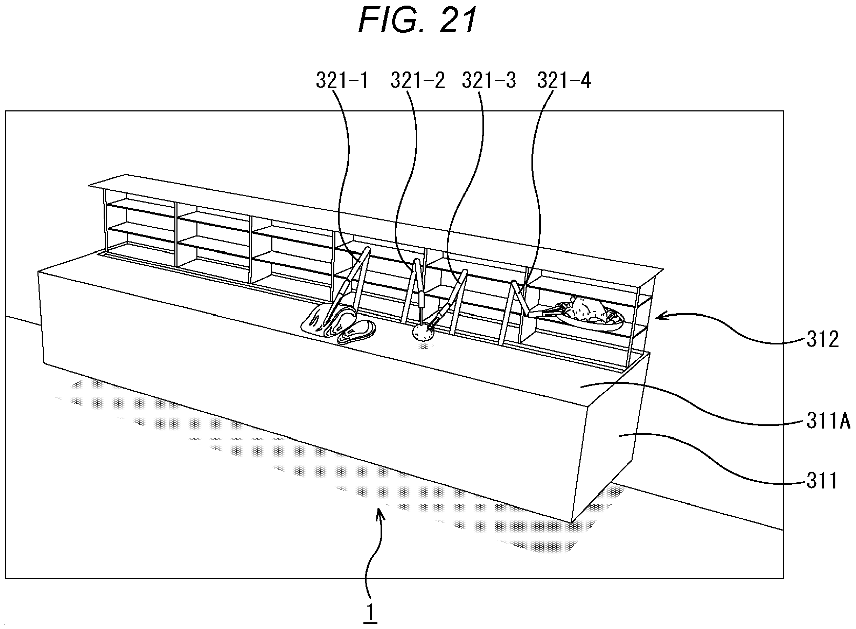

Fig. 21 is a perspective view illustrating an appearance of the cooking robot 1.

As illustrated in Fig. 21, the cooking robot 1 is a kitchen-type robot having an oblong rectangular parallelepiped housing 311. Various configurations are provided inside the housing 311 that is a main body of the cooking robot 1.

A cooking assistance system 312 is provided on a back side of the housing 311 so as to stand from an upper surface of the housing 311. Spaces formed in the cooking assistance system 312 by being divided by thin plate-like members have functions for assisting the cooking by cooking arms 321-1 to 321-4, such as a refrigerator, an oven range, and storage.

A rail is provided on a top plate 311A in a longitudinal direction, and the cooking arms 321-1 to 321-4 are provided on the rail. The cooking arms 321-1 to 321-4 can be changed in position along the rail as a moving mechanism.

The cooking arms 321-1 to 321-4 are robot arms configured by connecting cylindrical members with joint portions. Various operations related to cooking are performed by the cooking arms 321-1 to 321-4.

A space above the top plate 311A is a cooking space where the cooking arms 321-1 to 321-4 cook.

Although the four cooking arms are illustrated in Fig. 21, the number of cooking arms is not limited to four. Hereinafter, the cooking arms 321-1 to 321-4 will be collectively referred to as cooking arms 321 in a case where there is no need to distinguish the cooking arms 321-1 to 321-4.

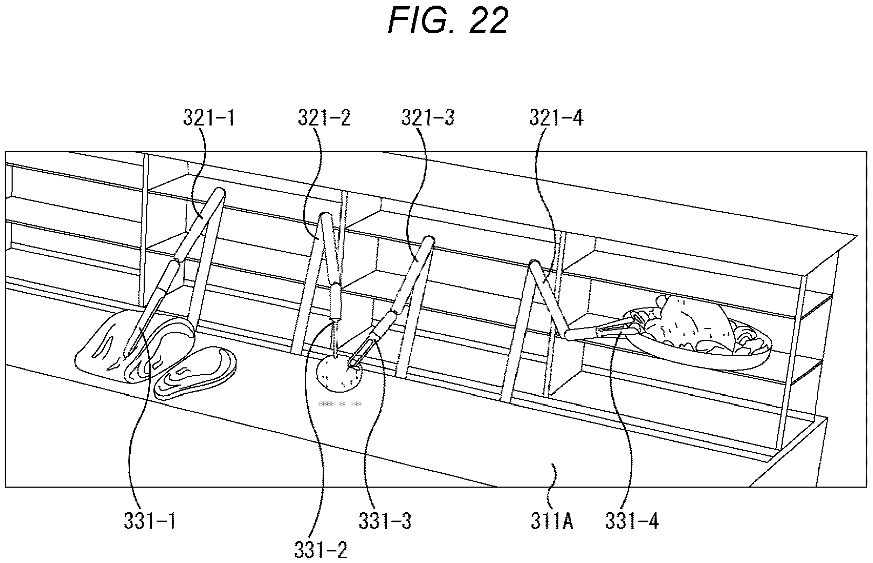

Fig. 22 is a view illustrating an enlarged situation of cooking arms 321.

As illustrated in Fig. 22, attachments having various cooking functions are attached to distal ends of the cooking arms 321. As the attachments for the cooking arms 321, various attachments such as an attachment having a manipulator function (hand function) for gripping an ingredient, tableware, or the like, and an attachment having a knife function for cutting an ingredient are prepared.

In the example in Fig. 22, a knife attachment 331-1 that is an attachment having the knife function is attached to the cooking arm 321-1. A lump of meat placed on the top plate 311A is cut using the knife attachment 331-1.

A spindle attachment 331-2, which is an attachment used to fix an ingredient or rotate an ingredient, is attached to the cooking arm 321-2.

A peeler attachment 331-3, which is an attachment having a peeler function to peel off an ingredient, is attached to the cooking arm 321-3.

A potato lifted by the cooking arm 321-2 using the spindle attachment 331-2 is peeled off by the cooking arm 321-3 using the peeler attachment 331-3. As described above, the plurality of cooking arms 321 can perform one work in cooperation with one another.

A manipulator attachment 331-4, which is an attachment having a manipulator function, is attached to the cooking arm 321-4. A frying pan with chicken is carried using the manipulator attachment 331-4 to the space of the cooking assistance system 312 having an oven function.

Cooking by such cooking arms 321 proceeds by appropriately replacing the attachments according to the content of the work. The replacement of the attachment is automatically performed by the cooking robot 1, for example.

It is also possible to attach the same attachment to a plurality of cooking arms 321, such as attaching the manipulator attachment 331-4 to each of the four cooking arms 321.

The cooking by the cooking robot 1 is not only performed using the above attachments prepared as tools for the cooking arms but also appropriately performed using the same tool as a tool used by a person for cooking. For example, a knife used by a person is gripped by the manipulator attachment 331-4, and cooking such as cutting of an ingredient is performed using the knife.

### - Configuration of cooking arm

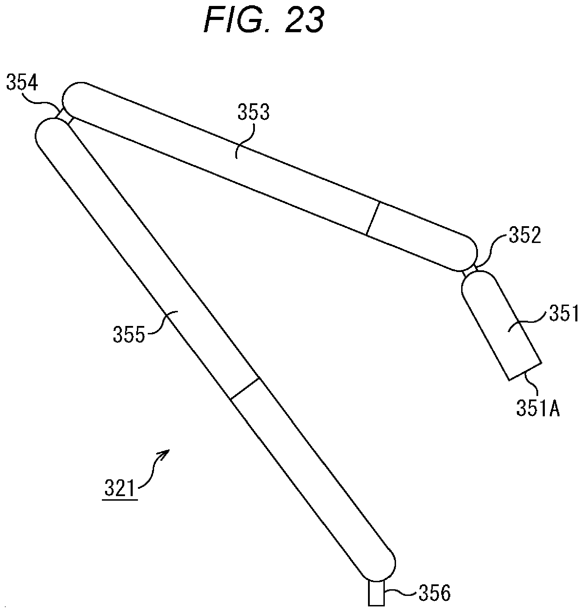

Fig. 23 is a view illustrating an appearance of the cooking arm 321.

As illustrated in Fig. 23, the cooking arm 321 is generally configured by connecting thin cylindrical members with hinge portions serving as the joint portions. Each hinge portion is provided with a motor or the like that generates a force for driving each member.

As the cylindrical members, an attachment/detachment member 351, a relay member 353, and a base member 355 are provided in order from the distal end. The attachment/detachment member 351 is a member having a length of about 1/5 of the length of the relay member 353. The combined length of the length of the attachment/detachment member 351 and the length of the relay member 353 is substantially the same as the length of the base member 355.

The attachment/detachment member 351 and the relay member 353 are connected with a hinge portion 352, and the relay member 353 and the base member 355 are connected with a hinge portion 354. The hinge portion 352 and the hinge portion 354 are provided at both ends of the relay member 353.

In this example, the cooking arm 321 is configured by the three cylindrical members. However, the cooking arm 321 may be configured by four or more cylindrical members. In this case, a plurality of the relay members 353 is provided.

An attachment/detachment portion 351A where an attachment is attached or detached is provided at a distal end of the attachment/detachment member 351. The attachment/detachment member 351 includes the attachment/detachment portion 351A where various attachments are attached or detached, and functions as a cooking function arm unit that cooks by operating the attachment.

An attachment/detachment portion 356 to be mounted to the rail is provided at a rear end of the base member 355. The base member 355 functions as a moving function arm unit that implements movement of the cooking arm 321.

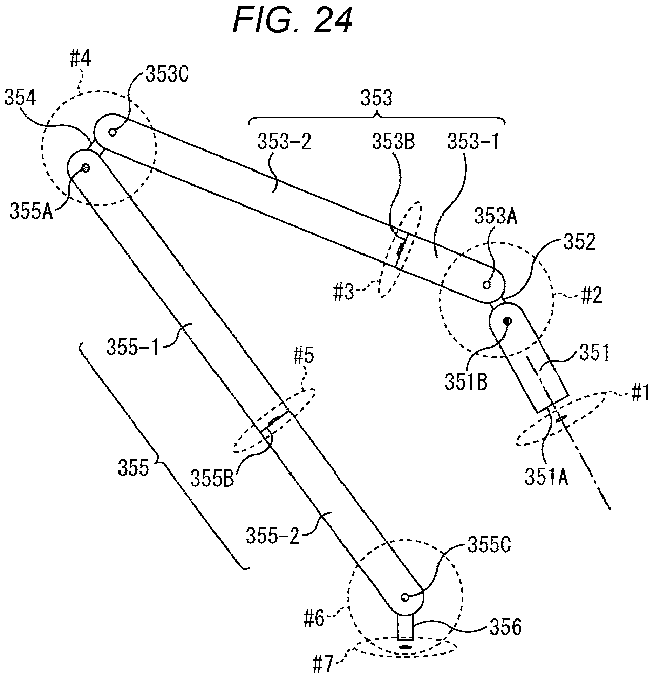

Fig. 24 is a view illustrating an example of movable ranges of respective parts of the cooking arm 321.

As illustrated by an ellipse #1, the attachment/detachment member 351 is rotatable about a central axis of a circular cross section. A flat small circle illustrated in the center of the ellipse #1 represents a direction of a rotation axis of an alternate long and short dash line.

As illustrated by a circle #2, the attachment/detachment member 351 is rotatable about an axis passing through a fitting portion 351B with the hinge portion 352. Furthermore, the relay member 353 is rotatable about an axis passing through a fitting portion 353A with the hinge portion 352.

Two small circles illustrated inside the circle #2 represent directions of respective rotation axes (in a direction perpendicular to the sheet surface). A movable range of the attachment/detachment member 351 centered on the axis passing through the fitting portion 351B and a movable range of the relay member 353 centered on the axis passing through the fitting portion 353A are, for example, a range of 90 degrees.

The relay member 353 is configured to be separated by a member 353-1 on a distal end side and a member 353-2 on a rear end side. As illustrated by an ellipse #3, the relay member 353 is rotatable about a central axis of a circular cross section at a connecting portion 353B between the member 353-1 and the member 353-2.

Other movable portions basically have a similar movable range.

In other words, as illustrated by a circle #4, the relay member 353 is rotatable about an axis passing through a fitting portion 353C with the hinge portion 354. Furthermore, the base member 355 is rotatable about an axis passing through a fitting portion 355A with the hinge portion 354.

The base member 355 is configured to be separated by a member 355-1 on a distal end side and a member 355-2 on a rear end side. As illustrated by an ellipse #5, the base member 355 is rotatable about a central axis of a circular cross section at a connecting portion 355B between the member 355-1 and the member 355-2.

As illustrated by a circle #6, the base member 355 is rotatable about an axis passing through a fitting portion 355C with the attachment/detachment portion 356.

As illustrated by an ellipse #7, the attachment/detachment portion 356 is mounted to the rail to become rotatable about a central axis of a circular cross section.

Thus, the attachment/detachment member 351 having the attachment/detachment portion 351A at the distal end, the relay member 353 connecting the attachment/detachment member 351 and the base member 355, and the base member 355, to the rear end of which the attachment/detachment portion 356 is connected, are respectively connected to be rotatable with the hinge portions. The movement of each movable portion is controlled by a controller in the cooking robot 1 according to the instruction command.

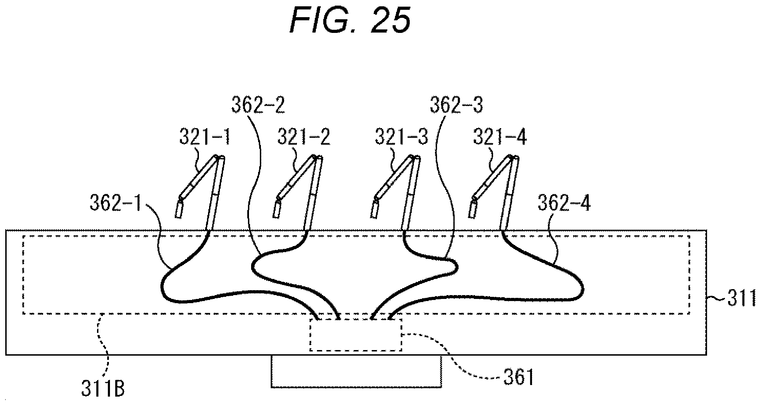

Fig. 25 is a view illustrating an example of connection between the cooking arms and the controller.

As illustrated in Fig. 25, the cooking arms 321 and a controller 361 are connected via a wire in a space 311B formed inside the housing 311. In the example in Fig. 25, the cooking arms 321-1 to 321-4 and the controller 361 are respectively connected via wires 362-1 to 362-4. The wires 362-1 to 362-4 having flexibility are appropriately bent depending on the positions of the cooking arms 321-1 to 321-4.

As described above, the cooking robot 1 is a robot capable of performing various works related to cooking by driving the cooking arms 321.

### - Configuration around cooking robot 1

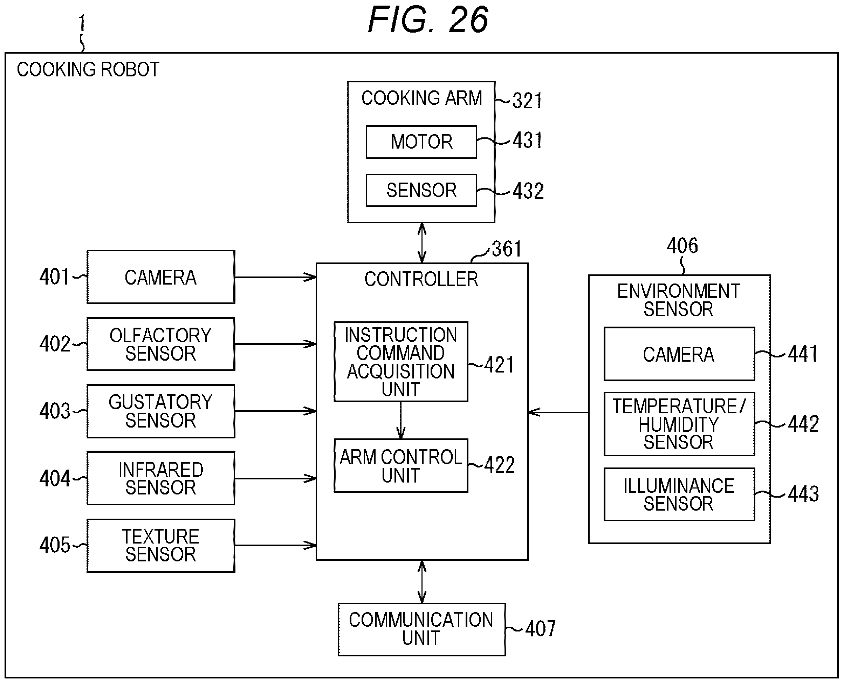

Fig. 26 is a block diagram illustrating an example of a configuration of the cooking robot 1 and its surroundings.

The cooking robot 1 is configured by connecting each part to the controller 361. The same configuration, of the configuration illustrated in Fig. 26, as the above-described configuration is denoted by the same sign. Overlapping description will be omitted as appropriate.

A camera 401, an olfactory sensor 402, a gustatory sensor 403, an infrared sensor 404, a texture sensor 405, an environment sensor 406, and a communication unit 407 are connected to the controller 361, in addition to the cooking arms 321.

Although not illustrated in Fig. 21 and the like, the sensors same as the sensors provided on the chef side are provided at predetermined positions of the cooking robot 1 itself or around the cooking robot 1. The camera 401, the olfactory sensor 402, the gustatory sensor 403, the infrared sensor 404, the texture sensor 405, and the environment sensor 406 have similar functions to the camera 41, the olfactory sensor 42, the gustatory sensor 43, the infrared sensor 51, the texture sensor 52, and the environment sensor 53 of the chef side.

The controller 361 is configured by a computer having a CPU, a ROM, a RAM, a flash memory, and the like. The controller 361 executes a predetermined program by the CPU to control an overall operation of the cooking robot 1.

In the controller 361, a predetermined program is executed to implement an instruction command acquisition unit 421 and an arm control unit 422.

The instruction command acquisition unit 421 acquires an instruction command transmitted from the control device 12 and received by the communication unit 407. The instruction command acquired by the instruction command acquisition unit 421 is supplied to the arm control unit 422.

The arm control unit 422 controls the operation of the cooking arms 321 in accordance with the instruction command acquired by the instruction command acquisition unit 421.

The camera 401 captures a state of the cooking arm 321 performing the cooking operation, a state of the ingredients to be cooked, and a state on the top plate 311A of the cooking robot 1, and outputs the images obtained by the capture to the controller 361. The camera 401 is provided at various positions such as a front of the cooking assistance system 312 and a distal end of the cooking arm 321.

The olfactory sensor 402 measures the aroma of the ingredients and transmits the olfaction sensor data to the controller 361. The olfactory sensor 402 is provided at various positions such as a front of the cooking assistance system 312 and a distal end of the cooking arm 321.

The gustatory sensor 403 measures the taste of the ingredients and transmits the gustatory sensor data to the controller 361. On the reproduction side as well, the gustatory sensor 403 such as the artificial lipid membrane-type gustatory sensor is provided.

Attachments having the functions as the olfactory sensor 402 and the gustatory sensor 403 may be prepared and used by being attached to the cooking arms 321 at the time of measurement.

The infrared sensor 404 outputs IR light and generates an IR image. The IR image generated by the infrared sensor 404 is output to the controller 361. Various analyses such as analyses of the cooking robot l's operations and ingredients may be performed on the basis of the IR image taken by the infrared sensor 404 instead of an image (RGB image) captured by the camera 401.

The texture sensor 405 is configured by sensors that output various sensor data used for texture analysis, such as a hardness sensor, a stress sensor, a water content sensor, and a temperature sensor. A hardness sensor, a stress sensor, a water content sensor, and a temperature sensor may be provided in the attachments mounted on the cooking arms 321 or cooking tools such as a kitchen knife, a frying pan, or an oven. The sensor data measured by the texture sensor 405 is output to the controller 361.

The environment sensor 406 is a sensor that measures an eating environment that is an environment of a space such as a dining room where the dishes reproduced by the cooking robot 1 are eaten. In the example of Fig. 26, the environment sensor 406 includes a camera 441, a temperature/humidity sensor 442, and an illuminance sensor 443. An environment of a reproduction space where the cooking robot 1 cooks may be measured by the environment sensor 406.

The camera 441 outputs a captured image of the eating space to the controller 361. By analyzing the captured image of the eating space, the color (brightness, hue, and saturation) of the eating space is measured, for example.

The temperature/humidity sensor 442 measures the temperature and humidity of the eating space, and outputs information indicating the measurement result to the controller 361.

The illuminance sensor 443 measures the brightness of the eating space and outputs information indicating the measurement result to the controller 361.

The communication unit 407 is a wireless communication module such as a wireless LAN module or a portable communication module compatible with long term evolution (LTE). The communication unit 407 communicates with the control device 12 or an external device such as a recipe data management server 21 on the Internet.

Furthermore, the communication unit 407 communicates with a portable terminal such as a smartphone or a tablet terminal used by the user. The user is a person who eats the food reproduced by the cooking robot 1. A user's operation on the cooking robot 1 such as selection of a dish may be input by an operation on the portable terminal.

As illustrated in Fig. 26, the cooking arm 321 is provided with a motor 431 and a sensor 432.

The motor 431 is provided at each joint portion of the cooking arm 321. The motor 431 performs a rotation operation around the axis under the control of the arm control unit 422. An encoder for measuring the amount of rotation of the motor 431, a driver for adaptively controlling the rotation of the motor 431 on the basis of the measurement result by the encoder, and the like are also provided at each joint portion.

The sensor 432 is configured by, for example, a gyro sensor, an acceleration sensor, a touch sensor, or the like. The sensor 432 measures angular velocity, acceleration, and the like of each joint portion during the operation of the cooking arm 321 and outputs information indicating the measurement result to the controller 361. The sensor data indicating the measurement result of the sensor 432 is also transmitted from the cooking robot 1 to the control device 12 as appropriate.

Information regarding the specification of the cooking robot 1 such as the number of cooking arms 321 is provided from the cooking robot 1 to the control device 12 at predetermined timing. In the control device 12, the operation is planned according to specifications of the cooking robot 1. The instruction commands generated in the control device 12 correspond to the specifications of the cooking robot 1.

### (3-2) Configuration of control device 12

The control device 12 that controls the operation of the cooking robot 1 is configured by a computer as illustrated in Fig. 19, similarly to the data processing device 11. Hereinafter, description will be given citing the configuration of the data processing device 11 illustrated in Fig. 19 as the configuration of the control device 12 as appropriate.

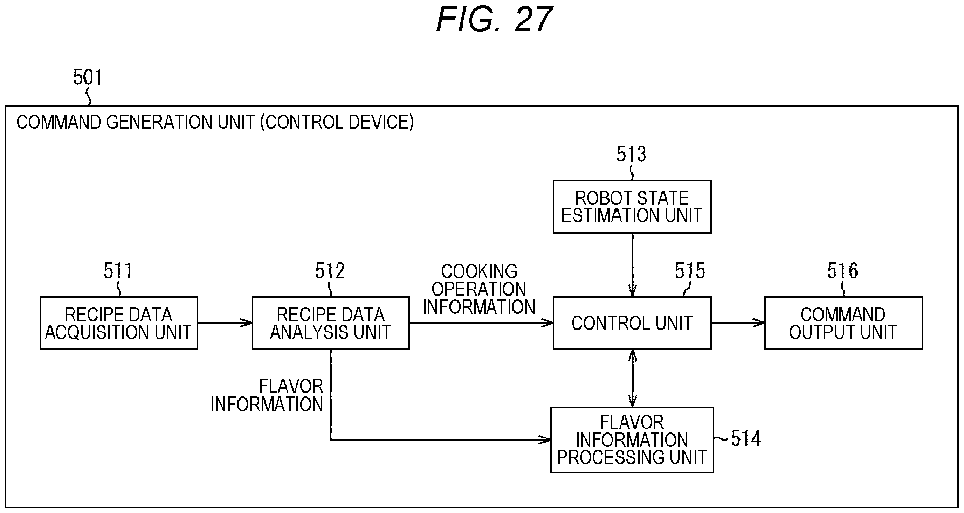

Fig. 27 is a block diagram illustrating a functional configuration example of the control device 12.

At least a part of functional units illustrated in Fig. 27 is implemented by the CPU 201 (Fig. 19) of the control device 12 executing a predetermined program.

As illustrated in Fig. 27, in the control device 12, a command generation unit 501 is implemented. The command generation unit 501 includes a recipe data acquisition unit 511, a recipe data analysis unit 512, a robot state estimation unit 513, a flavor information processing unit 514, a control unit 515, and a command output unit 516.

The recipe data acquisition unit 511 controls the communication unit 209 and acquires the recipe data by receiving the recipe data transmitted from the data processing device 11 or by communicating with the recipe data management server 21. The recipe data acquired by the recipe data acquisition unit 511 is, for example, recipe data of a dish selected by the user.

A database of the recipe data may be provided in the storage unit 208. In this case, the recipe data is acquired from the database provided in the storage unit 208. The recipe data acquired by the recipe data acquisition unit 511 is supplied to the recipe data analysis unit 512.

The recipe data analysis unit 512 analyzes the recipe data acquired by the recipe data acquisition unit 511. In a case where it is time to perform a certain cooking process, the recipe data analysis unit 512 analyzes the cooking process data set related to the cooking process and extracts the cooking operation information and the flavor information. The cooking operation information extracted from the cooking process data set is supplied to the control unit 515, and the flavor information is supplied to the flavor information processing unit 514.

In a case where the recipe data includes the attribute information and the environment information, these pieces of information are also extracted by the recipe data analysis unit 512 and supplied to the flavor information processing unit 514.

The robot state estimation unit 513 controls the communication unit 209 to receive the image and the sensor data transmitted from the cooking robot 1. From the cooking robot 1, the image captured by the camera of the cooking robot 1 and the sensor data measured by a sensor provided at a predetermined position of the cooking robot 1 are transmitted at a predetermined cycle. A situation around the cooking robot 1 is captured in the image captured by the camera of the cooking robot 1.

The robot state estimation unit 513 estimates the state around the cooking robot 1 such as the state of the cooking arms 321 and the state of the ingredients by analyzing the image and the sensor data transmitted from the cooking robot 1. Information indicating the state around the cooking robot 1 estimated by the robot state estimation unit 513 is supplied to the control unit 515.

The flavor information processing unit 514 controls, in cooperation with the control unit 515, the operation of the cooking robot 1 on the basis of the flavor information supplied from the recipe data analysis unit 512. The operation of the cooking robot 1 controlled by the flavor information processing unit 514 is, for example, an operation related to adjustment of the flavor of the ingredient.

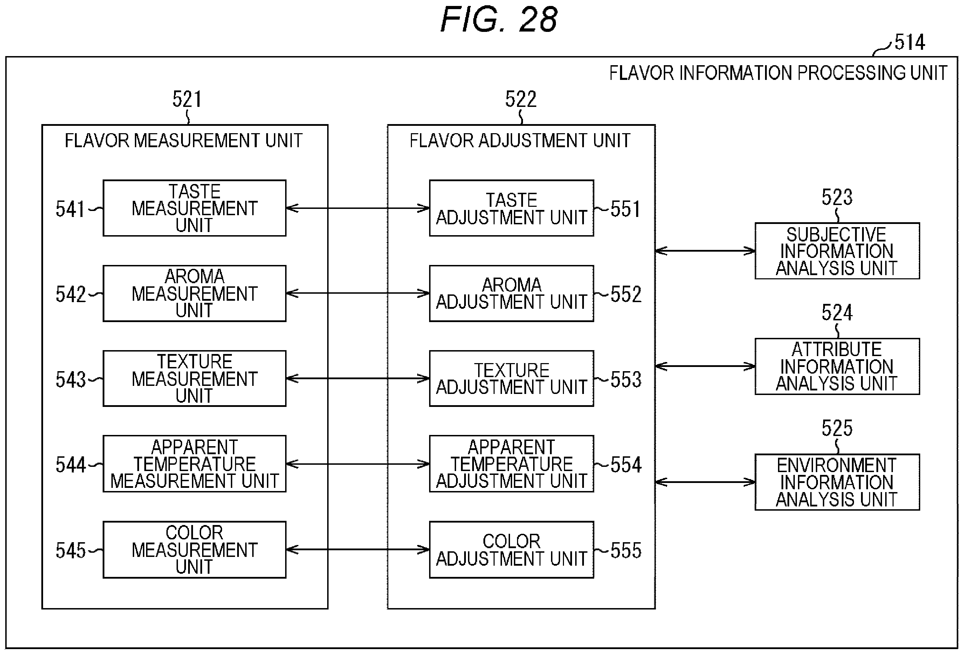

For example, the flavor information processing unit 514 controls the operation of the cooking robot 1 so that the flavor of the ingredient being cooked by the cooking robot 1 becomes the same as the flavor represented by the flavor sensor information. Details of the control by the flavor information processing unit 514 will be described with reference to Fig. 28.

The control unit 515 controls the operation of the cooking robot 1 by generating an instruction command and transmitting the instruction command from the command output unit 516. The operation of the cooking robot 1 is controlled by the control unit 515 on the basis of the cooking operation information supplied from the recipe data analysis unit 512 or a request by the flavor information processing unit 514.

For example, the control unit 515 identifies the ingredients to be used in the cooking process to be executed on the basis of the ingredient information included in the cooking operation information. Furthermore, the control unit 515 identifies the cooking tool used in the cooking process and the operation to be executed by the cooking arms 321 on the basis of the operation information included in the cooking operation information.

The control unit 515 sets a state where preparation of the ingredients is ready as a goal state, and sets an operation sequence from the current state, which is the current state of the cooking robot 1, to the goal state. The control unit 515 generates an instruction command for performing each operation configuring the operation sequence, and outputs the instruction command to the command output unit 516.

In the cooking robot 1, the cooking arms 321 are controlled according to the instruction command generated by the control unit 515, and the ingredients are prepared. Information representing the state of the cooking robot 1 at each timing, including the state of the cooking arms 321 is transmitted from the cooking robot 1 to the control device 12.

Furthermore, in a case where the ingredients are ready, the control unit 515 sets a state in which cooking using the prepared ingredients (cooking in one cooking process to be executed) is completed as the goal state, and sets the operation sequence from the current state to the goal state. The control unit 515 generates an instruction command for performing each operation configuring the operation sequence, and outputs the instruction command to the command output unit 516.

In the cooking robot 1, the cooking arms 321 are controlled according to the instruction command generated by the control unit 515, and cooking using the ingredients is performed.

In a case where the cooking using the ingredients is finished, the control unit 515 generates an instruction command for measuring the flavor and outputs the instruction command to the command output unit 516.

In the cooking robot 1, the cooking arms 321 are controlled according to the instruction command generated by the control unit 515, and the flavor of the ingredients is measured using the camera 401, the olfactory sensor 402, the gustatory sensor 403, the infrared sensor 404, and the texture sensor 405, as appropriate. Information representing a measurement result of the flavor is transmitted from the cooking robot 1 to the control device 12.

In the flavor information processing unit 514, a method of adjusting the flavor and the like are planned, and the flavor information processing unit 514 requests the control unit 515 to perform the operation for adjusting the flavor.

In a case where the operation for adjusting the flavor is requested, the control unit 515 sets a state where the operation has been completed as the goal state, and sets the operation sequence from the current state to the goal state. The control unit 515 outputs an instruction command for performing each operation configuring the operation sequence to the command output unit 516.

In the cooking robot 1, the cooking arms 321 are controlled according to the instruction command generated by the control unit 515, and the operation for adjusting the flavor is executed.

The operation of the cooking robot 1 is controlled by the control unit 515 by using, for example, the above instruction commands. The control unit 515 has a function as a generation unit for generating the instruction commands.

Note that the instruction command generated by the control unit 515 may be a command for giving an instruction of execution of an entire action for causing a certain state transition or may be a command for giving an instruction of execution of a part of an action. In other words, one action may be executed according to one instruction command or may be executed according to a plurality of instruction commands.

The command output unit 516 controls the communication unit 209 and transmits the instruction command generated by the control unit 515 to the cooking robot 1.

Fig. 28 is a block diagram illustrating a configuration example of the flavor information processing unit 514.

As illustrated in Fig. 28, the flavor information processing unit 514 includes a flavor measurement unit 521, a flavor adjustment unit 522, a subjective information analysis unit 523, an attribute information analysis unit 524, and an environment information analysis unit 525.

The flavor measurement unit 521 includes a taste measurement unit 541, an aroma measurement unit 542, a texture measurement unit 543, an apparent temperature measurement unit 544, and a color measurement unit 545.

The taste measurement unit 541 acquires the gustatory sensor data transmitted from the cooking robot 1 in response to the measurement of the flavor. The gustatory sensor data acquired by the taste measurement unit 541 is measured by the gustatory sensor 403 (Fig. 26). In the cooking robot 1, the flavor of the ingredients is measured at predetermined timing such as timing when the cooking operation of a certain cooking process is completed.

The aroma measurement unit 542 acquires the olfaction sensor data transmitted from the cooking robot 1 in response to the measurement of the flavor. The olfaction sensor data acquired by the aroma measurement unit 542 is measured by the olfactory sensor 402.

The texture measurement unit 543 acquires the texture sensor data transmitted from the cooking robot 1 in response to the measurement of the flavor. The texture sensor data acquired by the texture measurement unit 543 is measured by the texture sensor 405.

The apparent temperature measurement unit 544 acquires the apparent temperature sensor data transmitted from the cooking robot 1 in response to the measurement of the flavor. The apparent temperature sensor data acquired by the apparent temperature measurement unit 544 is measured by the temperature sensor provided at a predetermined position of the cooking robot 1 such as in the gustatory sensor 403.

The color measurement unit 545 acquires the color sensor data transmitted from the cooking robot 1 in response to the measurement of the flavor. The color sensor data acquired by the color measurement unit 545 is recognized by analyzing the image captured by the camera 401 of the cooking robot 1.

The sensor data acquired by each part of the flavor measurement unit 521 is supplied to the flavor adjustment unit 522.

The flavor adjustment unit 522 includes a taste adjustment unit 551, an aroma adjustment unit 552, a texture adjustment unit 553, an apparent temperature adjustment unit 554, and a color adjustment unit 555. The flavor information supplied from the recipe data analysis unit 512 is input to the flavor adjustment unit 522.

The taste adjustment unit 551 compares the gustatory sensor data configuring the flavor sensor information included in the recipe data with the gustatory sensor data acquired by the taste measurement unit 541, and determines whether or not both the gustatory sensor data match. Here, in a case where the operation same as the chef's cooking operation is performed by the cooking robot 1, whether or not the taste of the ingredients obtained by the cooking operation of the cooking robot 1 matches the taste of the ingredients obtained by the chef's cooking operation is determined.

In a case where it is determined that the gustatory sensor data configuring the flavor sensor information included in the recipe data matches the gustatory sensor data acquired by the taste measurement unit 541, the taste adjustment unit 551 determines that adjustment is not necessary for the taste.

On the other hand, in a case where it is determined that the gustatory sensor data configuring the flavor sensor information included in the recipe data does not match the gustatory sensor data acquired by the taste measurement unit 541, the taste adjustment unit 551 plans a method of adjusting the taste and requests the control unit 515 to perform an operation for adjusting the taste.

The control unit 515 is required to perform the operations such as adding salt when the saltiness is insufficient, and squeezing lemon juice when the sourness is insufficient.

Similarly, in the other processing units of the flavor adjustment unit 522, whether or not the taste of the ingredients obtained by the cooking operation of the cooking robot 1 matches the taste of the ingredients obtained by the chef's cooking operation is determined, and the flavor is adjusted as needed.

That is, the aroma adjustment unit 552 compares the olfaction sensor data configuring the flavor sensor information included in the recipe data with the olfaction sensor data acquired by the aroma measurement unit 542, and determines whether or not both the olfaction sensor data match. Here, whether or not the aroma of the ingredients obtained by the cooking operation of the cooking robot 1 matches the aroma of the ingredients obtained by the chef's cooking operation is determined.

In a case where it is determined that the olfaction sensor data configuring the flavor sensor information included in the recipe data matches the olfaction sensor data acquired by the aroma measurement unit 542, the aroma adjustment unit 552 determines that adjustment is not necessary for the aroma.

On the other hand, in a case where it is determined that the olfaction sensor data configuring the flavor sensor information included in the recipe data does not match the olfaction sensor data acquired by the aroma measurement unit 542, the aroma adjustment unit 552 plans a method of adjusting the aroma and requests the control unit 515 to perform an operation for adjusting the aroma.

The control unit 515 is required to perform operations such as squeezing lemon juice when it smells green, and chopping and adding herbs when the citrus aroma is weak.

The texture adjustment unit 553 compares the texture sensor data configuring the flavor sensor information included in the recipe data with the texture sensor data acquired by the texture measurement unit 543, and determines whether or not both the texture sensor data match. Here, whether or not the texture of the ingredients obtained by the cooking operation of the cooking robot 1 matches the texture of the ingredients obtained by the chef's cooking operation is determined.

In a case where it is determined that the texture sensor data configuring the flavor sensor information included in the recipe data matches the texture sensor data acquired by the texture measurement unit 543, the texture adjustment unit 553 determines that adjustment is not necessary for the texture.

On the other hand, in a case where it is determined that the texture sensor data configuring the flavor sensor information included in the recipe data does not match the texture sensor data acquired by the texture measurement unit 543, the texture adjustment unit 553 plans a method of adjusting the texture and requests the control unit 515 to perform an operation for adjusting the texture.

The control unit 515 is required to perform the operations such as beating the ingredients to become tender when the ingredients are hard, and increasing the time for simmering the ingredients.

The apparent temperature adjustment unit 554 compares the apparent temperature sensor data configuring the flavor sensor information included in the recipe data with the apparent temperature sensor data acquired by the apparent temperature measurement unit 544, and determines whether or not both the apparent temperature sensor data match. Here, whether or not the apparent temperature of the ingredients obtained by the cooking operation of the cooking robot 1 matches the apparent temperature of the ingredients obtained by the chef's cooking operation is determined.

In a case where it is determined that the apparent temperature sensor data configuring the flavor sensor information included in the recipe data matches the apparent temperature sensor data acquired by the apparent temperature measurement unit 544, the apparent temperature adjustment unit 554 determines that adjustment is not necessary for the apparent temperature.

On the other hand, in a case where it is determined that the apparent temperature sensor data configuring the flavor sensor information included in the recipe data does not match the apparent temperature sensor data acquired by the apparent temperature measurement unit 544, the apparent temperature adjustment unit 554 plans a method of adjusting the apparent temperature and requests the control unit 515 to perform an operation for adjusting the apparent temperature.

The control unit 515 is required to perform operations such as heating the ingredients using an oven when the apparent temperature of the ingredients is low, and cooling the ingredients when the apparent temperature of the ingredients is high.

The color adjustment unit 555 compares the color sensor data configuring the flavor sensor information included in the recipe data with the color sensor data acquired by the color measurement unit 545, and determines whether or not both the color sensor data match. Here, whether or not the color of the ingredients obtained by the cooking operation of the cooking robot 1 matches the color of the ingredients obtained by the chef's cooking operation is determined.

In a case where it is determined that the color sensor data configuring the flavor sensor information included in the recipe data matches the color sensor data acquired by the color measurement unit 545, the color adjustment unit 555 determines that adjustment is not necessary for the color.

On the other hand, in a case where it is determined that the color sensor data configuring the flavor sensor information included in the recipe data does not match the color sensor data acquired by the color measurement unit 545, the color adjustment unit 555 plans a method of adjusting the color and requests the control unit 515 to perform an operation for adjusting the color.

The control unit 515 is required to perform an operation such as moving the positions of the ingredients to approach the serving method by the chef in a case where the serving method of the cooking robot 1 is different from the serving method by the chef in a case where the serving of the cooked ingredients is performed.

The subjective information analysis unit 523 analyzes the flavor subjective information included in the flavor information, and reflects how the chef feels the flavor represented by the flavor subjective information in the flavor adjustment performed by the flavor adjustment unit 522.

The attribute information analysis unit 524 analyzes the attribute information included in the recipe data and reflects the chef's attributes in the flavor adjustment performed by the flavor adjustment unit 522.

The environment information analysis unit 525 analyzes the environment information included in the recipe data, and reflects the difference between the cooking environment and the eating environment measured by the environment sensor 406 in the flavor adjustment performed by the flavor adjustment unit 522.

### <Operation of cooking system>

Here, the operations of the cooking system having the above configuration will be described.

### (1) Operation on chef side

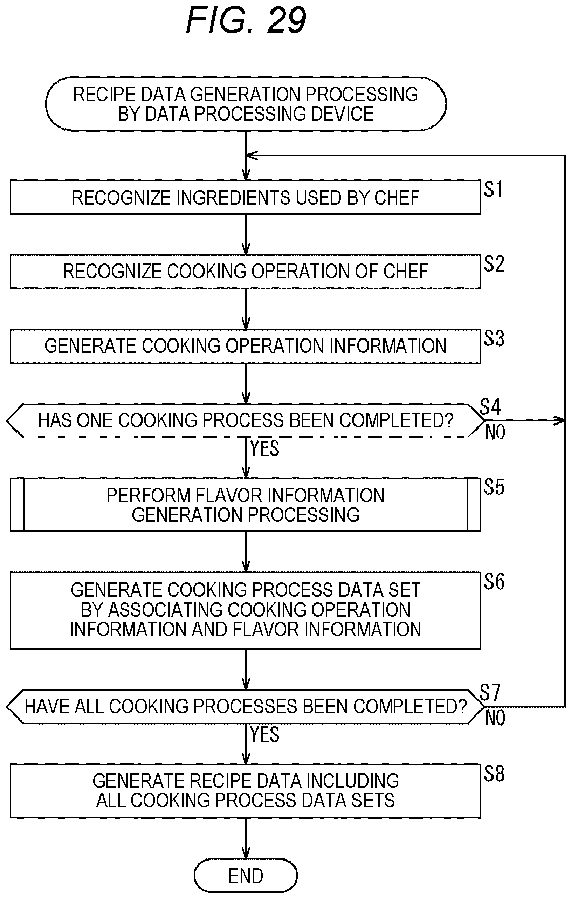

First, recipe data generation processing of the data processing device 11 will be described with reference to the flowchart of Fig. 29.

The processing in Fig. 29 is started when the ingredients and cooking tools are ready and the chef starts cooking. Capture by the camera 41, generation of an IR image by the infrared sensor 51, sensing by the sensors attached to the chef's body, and the like are also started.

In step S1, the ingredient recognition unit 251 of Fig. 20 analyzes the image captured by the camera 41 and recognizes the ingredients to be used by the chef.

In step S2, the operation recognition unit 253 analyzes the image captured by the camera 41, the sensor data representing the measurement result of the sensor attached to the chef's body, and the like, and recognizes the cooking operation of the chef.

In step S3, the recipe data generation unit 233 generates the cooking operation information on the basis of the ingredient information generated on the basis of the recognition result by the ingredient recognition unit 251 and the operation information generated on the basis of the recognition result by the operation recognition unit 253.

In step S4, the recipe data generation unit 233 determines whether or not one cooking process has been completed, and in a case where it is determined that one cooking process has not been completed, the processing returns to step S1 and the above-described processing is repeated.

In a case where it is determined in step S4 that one cooking process has been completed, the process proceeds to step S5.

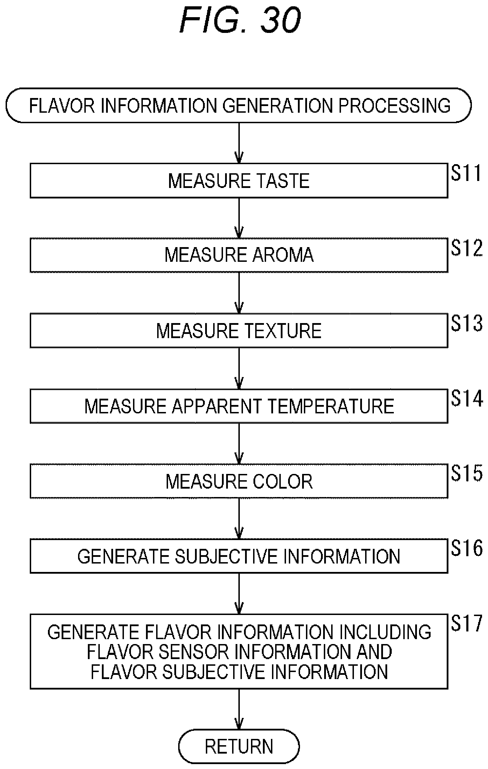

Flavor information generation processing is performed in step S5. The flavor information is generated by the flavor information generation processing. Details of the flavor information generation processing will be described below with reference to the flowchart of Fig. 30.

In step S6, the recipe data generation unit 233 generates the cooking process data set by associating the cooking operation information with the flavor information.

In step S7, the recipe data generation unit 233 determines whether or not all the cooking processes have been completed, and in a case where it is determined that all the cooking processes have not been completed, the processing returns to step S1 and the above-described processing is repeated. Similar processing is repeated for the next cooking process.

In a case where it is determined in step S7 that all the cooking processes have been completed, the processing proceeds to step S8.

In step S8, the recipe data generation unit 233 generates the recipe data including all the cooking process data sets.

Next, the flavor information generation processing performed in step S5 of Fig. 29 will be described with reference to the flowchart of Fig. 30.

In step S11, the taste measurement unit 261 measures the taste of the ingredients by controlling the gustatory sensor 43.

In step S12, the aroma measurement unit 262 measures the aroma of the ingredients by controlling the olfactory sensor 42.

In step S13, the texture measurement unit 263 measures the texture of the ingredients on the basis of the image captured by the camera 41 and the measurement result by the texture sensor 52.

In step S14, the apparent temperature measurement unit 264 measures the apparent temperature of the ingredients measured by the temperature sensor.

In step S15, the color measurement unit 265 measures the color of the ingredients on the basis of the image captured by the camera 41.

In step S16, the subjective information generation unit 266 generates the flavor subjective information on the basis of the sensor data acquired by each unit of the taste measurement unit 261 to the color measurement unit 265.

In step S17, the recipe data generation unit 233 generates the flavor information on the basis of the flavor sensor information including the sensor data measured by the taste measurement unit 261 to the color measurement unit 265 and the flavor subjective information generated by the subjective information generation unit 266.

After the flavor information is generated, the processing returns to step S5 in Fig. 29, and the processing of step S5 and subsequent steps is performed.

### (2) Operation on reproduction side

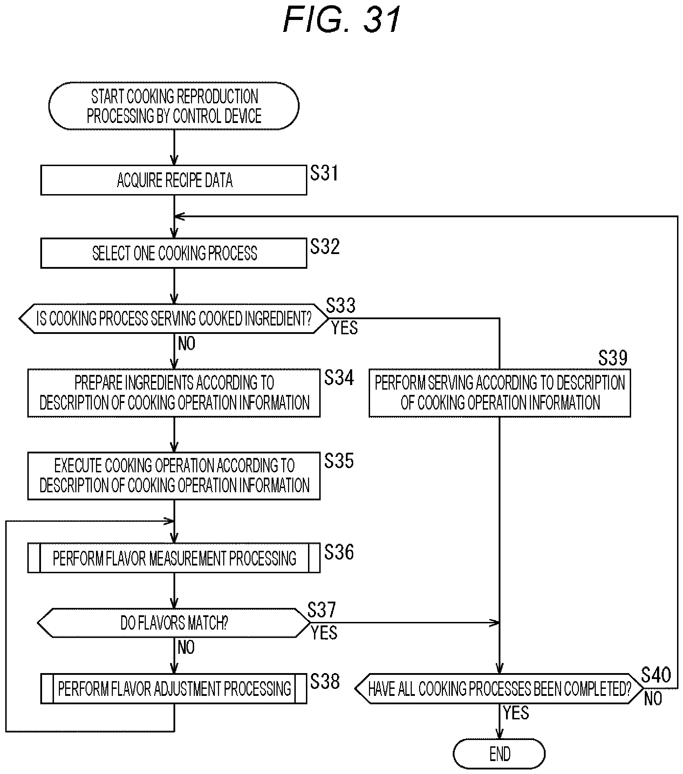

Dish reproduction processing of the control device 12 will be described with reference to the flowchart of Fig. 31.

In step S31, the recipe data acquisition unit 511 of Fig. 27 acquires the recipe data transmitted from the data processing device 11. The recipe data acquired by the recipe data acquisition unit 511 is analyzed by the recipe data analysis unit 512, and the cooking operation information and the flavor information are extracted. The cooking operation information is supplied to the control unit 515, and the flavor information is supplied to the flavor information processing unit 514.

In step S32, the control unit 515 selects one cooking process as a cooking process to be executed. The cooking processes are selected in order from the cooking process data set related to the first cooking process.

In step S33, the control unit 515 determines whether or not the cooking process to be executed is a cooking process of serving the cooked ingredients. In a case where it is determined in step S33 that the cooking process to be executed is not the cooking process of serving the cooked ingredients, the processing proceeds to step S34.

In step S34, the control unit 515 prepares the ingredients to be used in the cooking process to be executed on the basis of the description of the ingredient information included in the cooking operation information.

In step S35, the control unit 515 generates the instruction command on the basis of the description of the operation information included in the cooking operation information, and transmits the instruction command to the cooking robot 1 to cause the cooking arms 321 to execute the cooking operation.

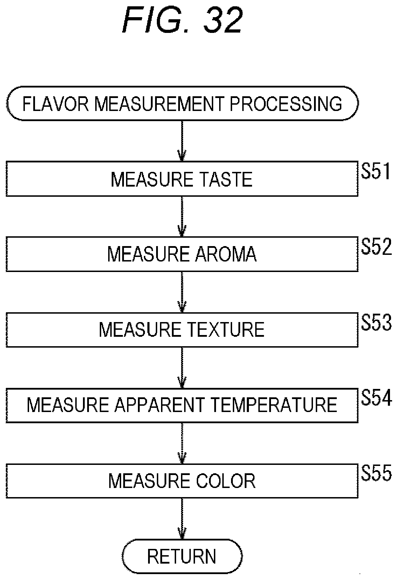

Flavor measurement processing is performed in step S36. By the flavor measurement processing, the flavor of the cooked ingredients cooked by the cooking robot 1 is measured. Details of the flavor measurement processing will be described below with reference to the flowchart of Fig. 32.

In step S37, the flavor adjustment unit 522 determines whether or not the flavor of the cooked ingredients matches the flavor represented by the flavor sensor information included in the recipe data. Here, the flavors are determined to match in a case where the flavor of the cooked ingredients matches the flavor represented by the flavor sensor information, for all the taste, aroma, texture, apparent temperature, and color that are configuration elements of the flavor.

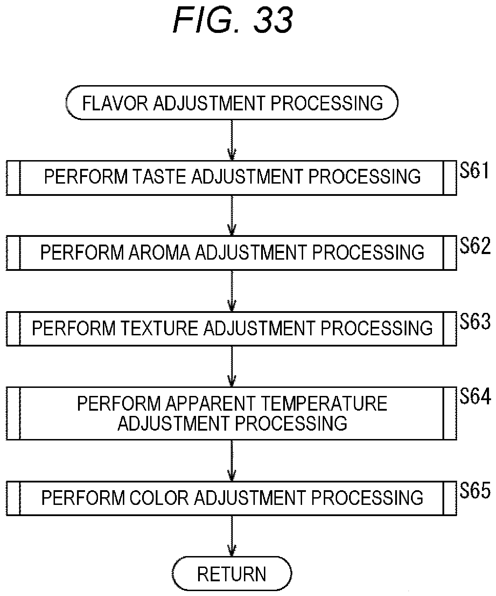

In a case where the flavors are determined not to match in step S37 because any of the configuration elements does not match, the flavor adjustment processing is performed in step S38. The flavor of the cooked ingredients is adjusted by the flavor adjustment processing. Details of the flavor adjustment processing will be described below with reference to the flowchart of Fig. 33.

After the flavor adjustment processing is performed in step S38, the processing returns to step S36, and the above-described processing is repeatedly executed until the flavors are determined to match.

Meanwhile, in a case where it is determined in step S33 that the cooking process to be executed is the cooking process of serving the cooked ingredients, the processing proceeds to step S39.

In step S39, the control unit 515 generates the instruction command on the basis of the description of the cooking operation information, and transmits the instruction command to the cooking robot 1 to cause the cooking arms 321 to serve the cooked ingredients.

In a case where serving of the ingredients is finished or in a case where it is determined in step S37 that the flavor of the cooked ingredient matches the flavor represented by the flavor sensor information included in the recipe data, the processing proceeds to step S40.

In step S40, the control unit 515 determines whether or not all the cooking processes have been completed, and in a case where it is determined that all the cooking processes have not been completed yet, the processing returns to step S32 and the above-described processing is repeated. Similar processing is repeated for the next cooking process.

On the other hand, when it is determined in step S40 that all the cooking steps have been completed, the dish is completed and the dish reproduction processing is terminated.

Next, the flavor measurement processing performed in step S36 of Fig. 31 will be described with reference to the flowchart of Fig. 32.

In step S51, the taste measurement unit 541 of Fig. 28 causes the cooking robot 1 to measure the taste of the cooked ingredients and acquires the gustatory sensor data.

In step S52, the aroma measurement unit 542 causes the cooking robot 1 to measure the aroma of the cooked ingredients and acquires the olfaction sensor data.

In step S53, the texture measurement unit 543 causes the cooking robot 1 to measure the texture of the cooked ingredients and acquires the texture sensor data.

In step S54, the apparent temperature measurement unit 544 causes the cooking robot 1 to measure the apparent temperature of the cooked ingredients and acquires the apparent temperature sensor data.

In step S55, the color measurement unit 545 causes the cooking robot 1 to measure the color of the cooked ingredients and acquires the color sensor data.

By the above processing, the flavor of the cooked ingredients is measured and can be used for the flavor adjustment processing to be described below. Thereafter, the processing returns to step S36 of Fig. 31 and the processing of step S36 and subsequent steps is performed.

Next, the flavor adjustment processing performed in step S38 of Fig. 31 will be described with reference to the flowchart of Fig. 33.

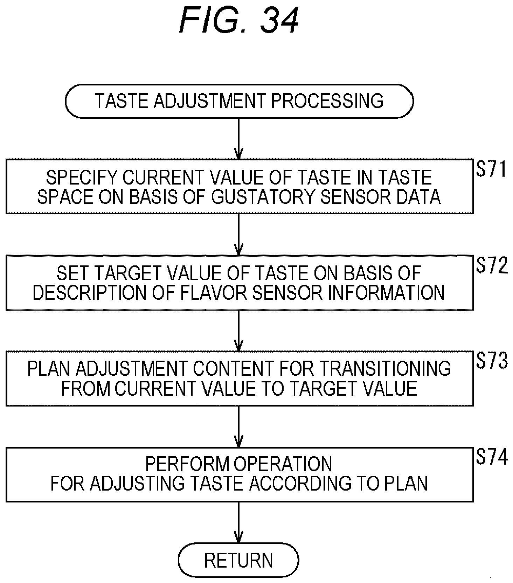

In step S61, the taste adjustment unit 551 performs taste adjustment processing. The taste adjustment processing is performed when the taste of the cooked ingredients does not match the taste represented by the gustatory sensor data included in the flavor sensor information. Details of the taste adjustment processing will be described below with reference to the flowchart of Fig. 34.

In step S62, the aroma adjustment unit 552 performs aroma adjustment processing. The aroma adjustment processing is performed when the aroma of the cooked ingredients does not match the aroma represented by the olfaction sensor data included in the flavor sensor information.

In step S63, the texture adjustment unit 553 performs texture adjusting processing. The texture adjustment processing is performed when the texture of the cooked ingredients does not match the texture represented by the texture sensor data included in the flavor sensor information.

In step S64, the apparent temperature adjustment unit 554 performs apparent temperature adjusting processing. The apparent temperature adjustment processing is performed when the apparent temperature of the cooked ingredients does not match the apparent temperature represented by the apparent temperature sensor data included in the flavor sensor information.

In step S65, the color adjustment unit 555 performs color adjustment processing. The color adjustment processing is performed when the color of the cooked ingredients does not match the color represented by the color sensor data included in the flavor sensor information.

For example, in a case of performing an operation of sprinkling lemon juice on the ingredients to increase the sourness as the taste adjustment processing, this may change the aroma of the ingredients, and the aroma may also need to be adjusted. In this case, the aroma adjusting processing is performed together with the taste adjusting processing.

In this way, adjustment of any element of flavor may affect another element, and in reality, adjustment of a plurality of elements is collectively performed.

Next, the taste adjustment processing performed in step S61 of Fig. 33 will be described with reference to the flowchart of Fig. 34.

In step S71, the taste adjustment unit 551 identifies a current value of the taste of the cooked ingredients in the taste space on the basis of the gustatory sensor data acquired by the taste measurement unit 541.

In step S72, the taste adjustment unit 551 sets a target value of the taste on the basis of the description of the flavor sensor information included in the recipe data. The taste of the ingredients obtained by the cooking operation performed by the chef, which is represented by the gustatory sensor data included in the flavor sensor information, is set as the target value.

In step S73, the taste adjustment unit 551 plans adjustment content for the taste of the ingredients transitioning from the current value to the target value.

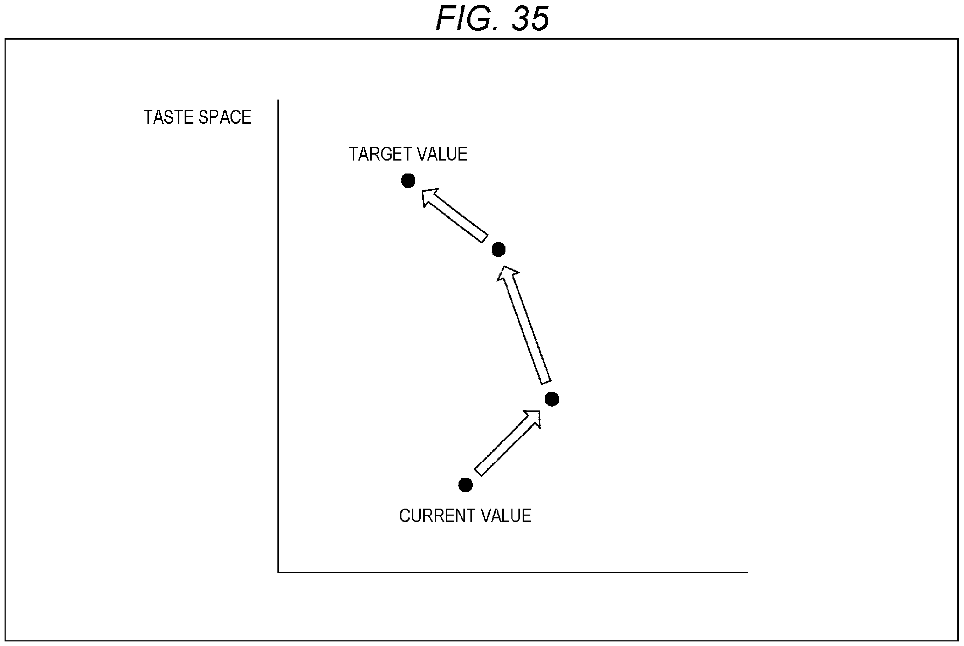

Fig. 35 is a diagram illustrating an example of planning.

The vertical axis illustrated in Fig. 35 represents one of the seven tastes, and the horizontal axis represents another one. For convenience of description, the taste space is represented as a two-dimensional space in Fig. 35, but in a case where the taste includes the seven types of saltiness, sourness, bitterness, sweetness, umami, pungency, and astringency as described above, the taste space becomes a seven-dimensional space.

The taste of the cooked ingredients is represented as the current value by the gustatory sensor data measured by the cooking robot 1.

Furthermore, the taste to be the target value is set by the gustatory sensor data included in the flavor sensor information. The taste to be the target value is the taste of the ingredients cooked by the chef.

Since there are no seasonings and ingredients that change only one type of tastes: saltiness, sourness, bitterness, sweetness, pungency, umami, and astringency, there are some cases where the taste of the ingredients cannot be directly changed from the current value taste to the target value taste. In this case, as illustrated by the white arrows, the cooking operations are planned to realize the target value taste through a plurality of tastes.

Returning to the description of Fig. 34, in step S74, the taste adjustment unit 551 causes the control unit 515 to perform the operation for adjusting the taste according to the plan.

Thereafter, the processing returns to step S61 of Fig. 33 and the processing of step S61 and subsequent steps is performed.

The aroma adjustment processing (step S62), the texture adjustment processing (step S63), the apparent temperature adjustment processing (step S64), and the color adjustment processing (step S65) are similarly performed to the taste adjustment processing of Fig. 34. That is, the cooking operation is performed to change the taste of the cooked ingredients from the current value to the target value, with the flavor of the cooked ingredients as the current value and the flavor represented by the flavor sensor information of the recipe data as the target value.

By the above series of processing, the cooking robot 1 reproduces the dish having the same flavor as the dish prepared by the chef. The user can eat the dish with the same flavor as the dish made by the chef.

In addition, the chef can serve various people with the dishes with the same flavor as the dishes made by the chef. In addition, the chef can leave the dishes made by the chef in a reproducible form as the recipe data.

### <Modifications>

### - Example of updating cooking process on reproduction side

In some cases, the reproduction side cannot prepare the same ingredients as those described in the recipe data (ingredient information) as those used for cooking. In these cases, processing of partially updating the recipe data may be performed by the control unit 515 (Fig. 27) .

For example, in a case where a certain ingredient is insufficient, the control unit 515 refers to an alternative ingredient database and selects an alternative ingredient from the ingredients that can be prepared on the reproduction side. The alternative ingredient is an ingredient used in place of the ingredient described in the recipe data as an ingredient used for cooking. The ingredients that can be prepared on the reproduction side are specified by, for example, recognizing the situation around the cooking robot 1.

In the alternative ingredient database referred to by the control unit 515, for example, information regarding alternative ingredients predetermined by a food pairing method is described.

For example, in a case where the ingredient "sea urchin" described in the recipe data cannot be prepared, the control unit 515 refers to the alternative ingredient database and selects an ingredient combining "pudding" and "soy sauce" as the alternative ingredient. It is well known that the flavor of "sea urchin" can be reproduced by combining "pudding" and "soy sauce".

The control unit 515 updates the cooking operation information in which the information regarding the cooking process using "sea urchin" is described with cooking operation information in which information regarding an operation of combining "pudding" and "soy sauce" and information regarding a cooking process using the alternative ingredient are described. The control unit 515 controls the cooking operation of the cooking robot 1 on the basis of the updated cooking operation information.

The flavor of the alternative ingredient prepared in this way may be measured and the flavor may be adjusted as appropriate.

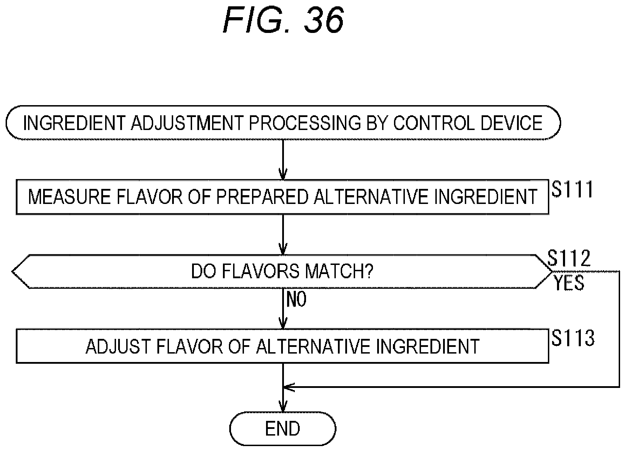

Fig. 36 is a flowchart for describing the processing of the control device 12 for adjusting the flavor of the alternative ingredient.

The processing of Fig. 36 is performed after the alternative ingredient is prepared.

In step Sill, the flavor measurement unit 521 of the flavor information processing unit 514 measures the flavor of the prepared alternative ingredient and acquires sensor data representing the flavor of the alternative ingredient.

In step S112, the flavor adjustment unit 522 determines whether or not the flavor of the alternative ingredient matches the flavor of the ingredient before substitution. In the case of the above-described example, it is determined whether or not the flavor of the alternative ingredient combining "pudding" and "soy sauce" matches the flavor of "sea urchin". The flavor of "sea urchin" is specified by the flavor sensor information included in the recipe data.

In a case where it is determined in step S112 that the flavor of the alternative ingredient does not match the flavor of the ingredient before substitution because the sensor data representing the flavor of the alternative ingredient does not match the flavor sensor information included in the recipe data, the processing proceeds to step S113.

In step S113, the flavor adjustment unit 522 adjusts the flavor of the alternative ingredient. Adjustment of the flavor of the alternative ingredient is similarly performed to the processing of adjusting the flavor of the cooked ingredients.

In a case where adjustment of the flavor of the alternative ingredient has been performed or in a case where it is determined in step S112 that the flavor of the alternative ingredient matches the flavor of the ingredient before substitution, the processing of adjusting the flavor of the alternative ingredient is terminated. Thereafter, processing is performed according to the updated cooking process using the alternative ingredient.

Thereby, even in a case where the reproduction side cannot prepare the ingredients same as the ingredients used on the chef side, cooking can proceed using the alternative ingredient. Since the flavor of the alternative ingredient is the same as that of the ingredient before substitution, the finally finished dish will be the same as or similar to the dish prepared by the chef.

The alternative ingredient database may be prepared in the control device 12 or may be prepared in a predetermined server such as the recipe data management server 21. The cooking operation information may be updated in the control device 12 or in the data processing device 11.

### - Use example of flavor subjective information

There are some cases where specifications of the sensors on both sides are different, such that the sensors provided on the chef side have higher measurement accuracy than the sensors provided on the reproduction side. In the case where the specifications on both sides are different, the measurement results are different in the case of measuring the flavor of the same ingredient by the respective sensors.

To enable determination of the flavor of the cooked ingredients by the cooking robot 1 and the flavor of the ingredients cooked by the chef even in the case where the specifications of the sensors are different between the chef side and the reproduction side, the flavor subjective information is used.

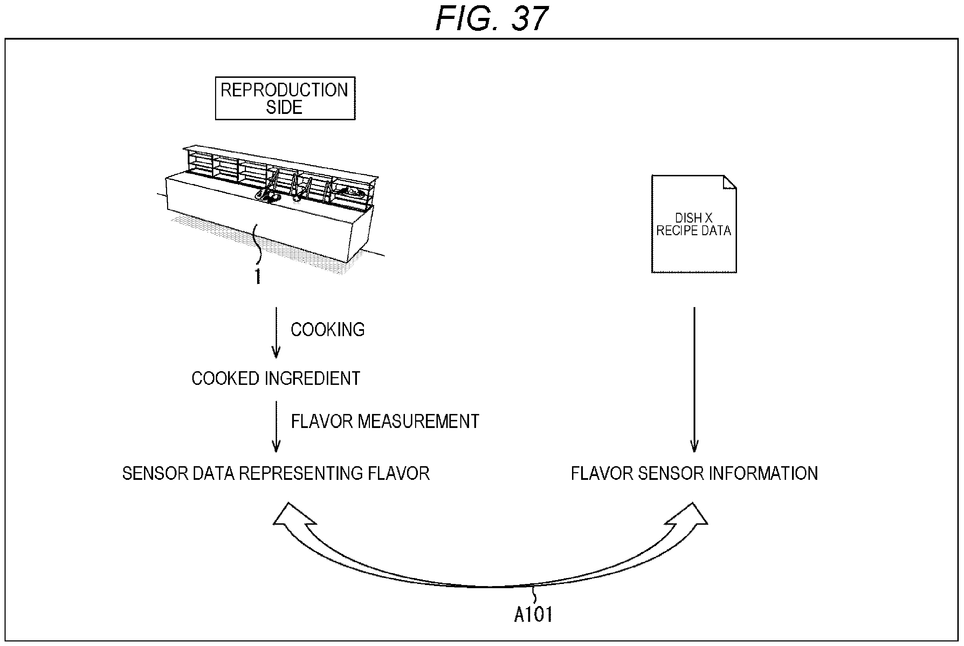

Fig. 37 is a diagram illustrating an example of determining the flavor.

In the above example, as illustrated on the left side of Fig. 37, when the cooked ingredients are obtained by cooking in a certain cooking process on the reproduction side, the flavor is measured and the sensor data representing the flavor of the cooked ingredients is obtained.

Furthermore, as illustrated on the right side of Fig. 37, the flavor sensor information is extracted from the recipe data, and as illustrated by the arrow A101, the sensor data representing the flavor of the cooked ingredients is compared with the flavor sensor information, so that determination of the flavors (determination as to whether or not the flavors match) is performed.

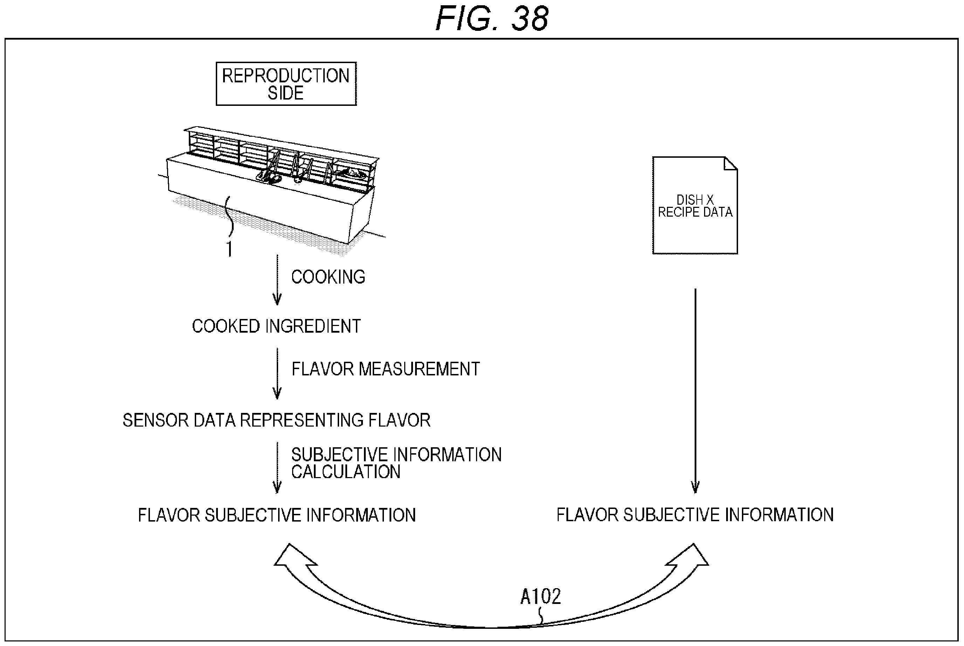

Fig. 38 is a diagram illustrating an example of determining the flavors using flavor subjective information.

In a case of determining the flavors using the flavor subjective information, the flavor subjective information is calculated on the basis of the sensor data representing the flavor of the cooked ingredients on the reproduction side, as illustrated on the left side of Fig. 38. For the calculation of the flavor subjective information, a model generated on the basis of how the chef feels the taste as described with reference to Fig. 6 is used.

The subjective information analysis unit 523 (Fig. 28) of the flavor information processing unit 514 has a model same as the model for generating gustatory subjective information prepared by the chef side.

As illustrated by the arrow A102, the subjective information analysis unit 523 determines the flavors by comparing the flavor subjective information calculated on the basis of the sensor data representing the flavor of the cooked ingredients with the flavor subjective information extracted from the recipe data. It is determined that the flavors match in a case where the pieces of flavor subjective information match, and processing of the next cooking process is performed.

Thereby, even in the case where the specifications of the sensors provided on the chef side and the reproduction side are different, the ingredients or the dish having the flavor same as the flavor that the chef feels can be reproduced.

As described above, as the mode for determining the flavors, the mode based on the sensor data and the mode based on the flavor subjective information are prepared.

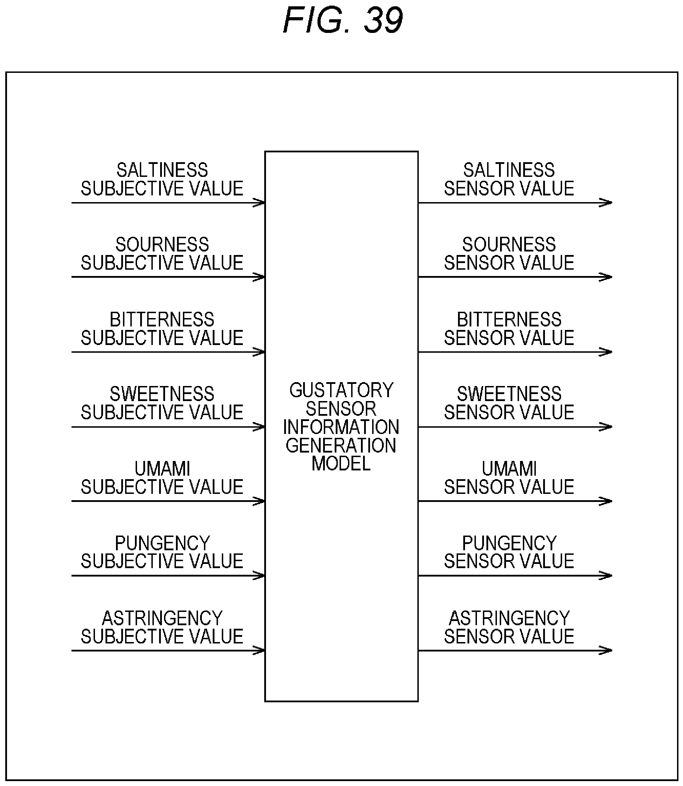

Fig. 39 is a diagram illustrating an example of a model for generating sensor data.

As illustrated in Fig. 39, a model capable of calculating sensor data under the specification of the sensors provided on the reproduction side may be prepared for the subjective information analysis unit 523 on the basis of the flavor subjective information included in the recipe data.

A gustatory sensor information generation model illustrated in Fig. 39 is a model such as a neural network model generated by deep learning on the basis of the sensor data regarding the taste measured by the sensors prepared on the reproduction side and the subjective values representing how the chef feels the taste. For example, an administrator who manages the recipe data prepares models according to the specifications of various sensors and provides the models to the reproduction side.

In this case, the subjective information analysis unit 523 calculates corresponding sensor data by inputting the flavor subjective information into a model. The subjective information analysis unit 523 determines the flavors by comparing the sensor data obtained by measuring the flavor of the cooked ingredients by the cooking robot 1 with the sensor data calculated using the model.

### - Use example of attribute information

The recipe data includes the attribute information indicating the chef's attributes and the like. Since the age, gender, nationality, living area, and the like affect how the flavor is perceived, the flavor of the reproduced ingredients may be adjusted according to the difference between the chef's attributes and the attributes of the person who eats the dish reproduced by the cooking robot 1.

The cook attribute information, which is the attribute information extracted from the recipe data, is supplied to the attribute information analysis unit 524 and used to control the flavor adjustment performed by the flavor adjustment unit 522. Eater attribute information representing attributes of an eater, which is input by the person who eats the dish reproduced by the cooking robot 1, is also supplied to the attribute information analysis unit 524.

The attribute information analysis unit 524 identifies the chef's attributes on the basis of the cook attribute information, and also identifies the eater's attributes on the basis of the eater attribute information.

For example, the attribute information analysis unit 524 adjusts the texture of the ingredients so as to be tender in a case where it is identified that the eater is significantly older than the chef and the eater is an elderly person.

Furthermore, in a case where the nationalities of the eater and the chef are different, the attribute information analysis unit 524 controls the flavor of the ingredients adjusted by the flavor adjustment unit 522 according to the difference in nationalities on the basis of the prepared information, as described above. Similarly, in a case where other attributes of the eater and the chef, such as the gender and living area, are different, the attribute information analysis unit 524 controls the flavor of the ingredients adjusted by the flavor adjustment unit 522 according to the difference in the attributes between the eater and the chef.

As a result, although the flavor is basically the same as that of the chef, the dish is reproduced with the flavor finely adjusted according to the preference of the eater.

In addition, the attribute information analysis unit 524 identifies the attributes of the ingredients on the basis of the food attribute information, and also specifies the attributes of the ingredients prepared on the reproduction side.

In the case where the attributes of the ingredients used on the chef side and the ingredients prepared on the reproduction side are different, the attribute information analysis unit 524 controls the flavor of the ingredients adjusted by the flavor adjustment unit 522 according to the difference in the attributes.

In this way, the flavor of the ingredients may be adjusted on the reproduction side on the basis of the difference in various attributes between the chef side and the reproduction side.

### - Use example of environment information

### (1) Adjustment of eating environment

The recipe data includes the environment information representing the cooking environment that is the environment of the space where the chef cooks. Since the color, temperature, brightness, and the like of a space affect how the flavor is perceived, adjustment may be performed to bring the eating environment, such as a dining room where the dish reproduced by the cooking robot 1 is eaten, close to the cooking environment. The environment information extracted from the recipe data is supplied to the environment information analysis unit 525 and used for adjusting the eating environment.

For example, the environment information analysis unit 525 controls lighting equipment in the dining room to bring the color in the eating environment measured by analyzing the image captured by the camera 441 (Fig. 26) close to the color in the cooking environment represented by the environment information. The environment information analysis unit 525 has a function as an environmental control unit that adjusts the eating environment by controlling an external device.

Furthermore, the environment information analysis unit 525 controls air conditioning equipment in the dining room to bring the temperature and humidity in the eating environment measured by the temperature/humidity sensor 442 close to the temperature and humidity in the cooking environment represented by the environment information.

The environment information analysis unit 525 controls the lighting equipment in the dining room to bring the brightness in the eating environment measured by the illuminance sensor 443 close to the brightness in the cooking environment represented by the environment information.

Thereby, the eating environment can be brought close to the cooking environment, and how the person who eats the dish reproduced by the cooking robot 1 feels the flavor can be brought close to how the chef feels the flavor.

### (2) Correction of flavor sensor information

Information regarding the specifications of the sensors provided on the chef side may be included in the environment information and provided to the reproduction side. On the reproduction side, the flavor sensor information included in the recipe data is corrected on the basis of the difference between the sensors provided on the chef side and the sensors provided on the reproduction side.

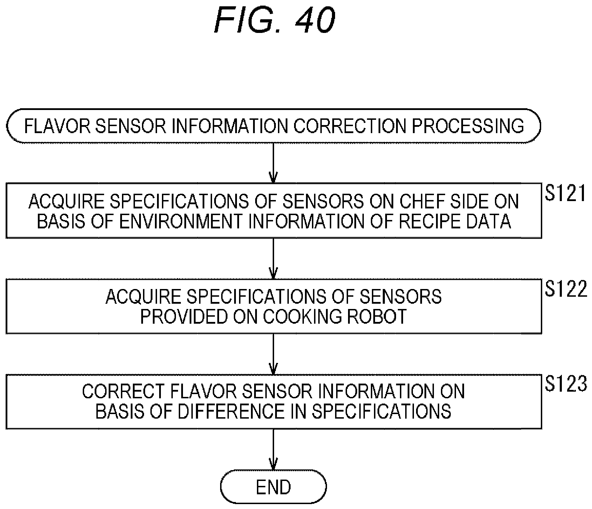

Fig. 40 is a flowchart for describing processing of correcting the flavor sensor information by the control device 12.

In step S121, the environment information analysis unit 525 acquires the specification of the sensors provided on the chef side on the basis of the environment information included in the recipe data.

In step S122, the environment information analysis unit 525 acquires the specification of the sensors provided around the cooking robot 1 on the reproduction side.

In step S123, the environment information analysis unit 525 corrects the flavor sensor information included in the recipe data, which is the sensor data measured on the chef side, on the basis of the difference between the specification of the sensors provided on the chef side and the specification of the sensors provided around the cooking robot 1. For the environment information analysis unit 525, information representing a correspondence between a measurement result of the sensor provided on the chef side and a measurement result of the sensor provided on the reproduction side is prepared as information for correction.

The flavor sensor information corrected in this way is used for determining the flavor. Thereby, the difference in the environment is absorbed and the flavors can be determined.

### <Others>

### - Modification of configuration

The cooking robot that reproduces a dish on the basis of the recipe data has been assumed to be the cooking robot 1 installed in a home, but cooking may be reproduced by cooking robots installed in various places. For example, the above-described technique can be applied even in a case where cooking is reproduced by a cooking robot installed in a factory or a cooking robot installed in a restaurant.

Furthermore, the cooking robot that reproduces a dish on the basis of the recipe data has been the cooking robot 1 that operates the cooking arms to cook, but the dishes may be reproduced by various cooking robots capable of cooking ingredients by a configuration other than the cooking arms.

In the above description, the cooking robot 1 has been controlled by the control device 12, but the cooking robot 1 may be directly controlled by the data processing device 11 that generates the recipe data. In this case, the data processing device 11 is provided with each configuration of the command generation unit 501 described with reference to Fig. 27.

Furthermore, each configuration of the command generation unit 501 may be provided in the recipe data management server 21.

The server function of the recipe data management server 21 that manages the recipe data and provides the recipe data to other devices may be provided in the data processing device 11 that generates the recipe data.

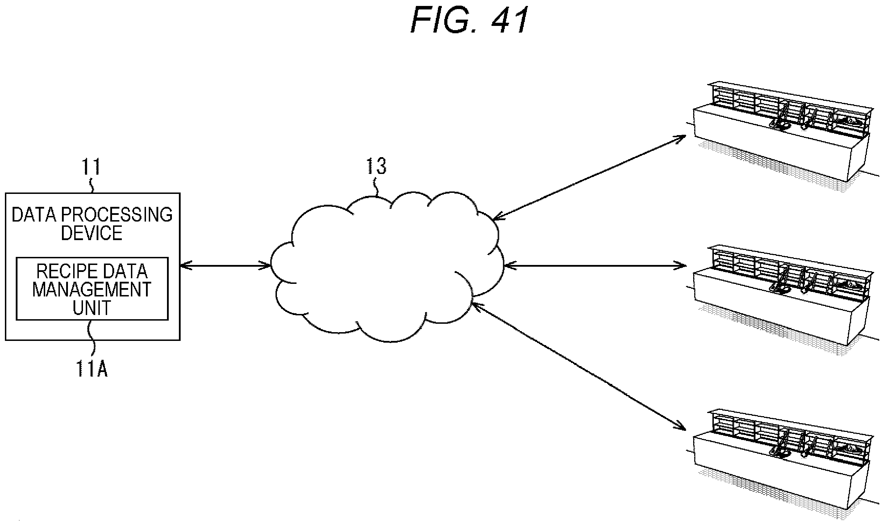

Fig. 41 is a diagram illustrating another configuration example of the cooking system.

A recipe data management unit 11A included in the data processing device 11 has a server function to manage the recipe data and provide the recipe data to other devices. The recipe data managed by the recipe data management unit 11A is provided to a plurality of cooking robots and a control device for controlling the cooking robots.

### - Data management

Since the above-described recipe data, cooking process data sets (cooking operation information and flavor information), and the like can be said to be products that creatively express thoughts and feelings about the cooking processes, they can be considered as literary works.

For example, the chef who cooks (for example, the chef who runs a famous restaurant) completes a delicious dish with creativity by repeating trials of selection of ingredients and tasting in the cooking processes. In this case, the recipe data and the cooking process data set (cooking operation information and flavor information) have value as data, and a situation where compensation is required when used by others can be assumed.

Therefore, an application of managing copyright of the recipe data, cooking process data sets (cooking operation information and flavor information), and the like in a similar manner to music or the like can be considered.

That is, in the present disclosure, it is also possible to protect individual recipe data and cooking process data sets by using copyright protection techniques such as copy protection and encryption, which provide protection functions for individual data.

In this case, for example, the recipe data management server 21 of Fig. 14 (the data processing device 11 of Fig. 41) manages the copyright in a state where the chef and the recipe data (or cooking process data sets) are associated with each other.

Next, in a case where the user wants the cooking robot 1 to cook using the recipe data, the user pays a use fee for the recipe data, thereby using the recipe data downloaded to the control device 12 for the cooking by the cooking robot 1, for example. Note that the use fee is gone back to the chef who is the creator of the recipe data, a data manager who manages the recipe data, and the like.

Furthermore, in the present disclosure, it is also possible to protect individual recipe data and cooking process data sets by using blockchain technology for managing a transaction history of data as a ledger on a server in a distributed manner.

In this case, for example, the recipe data management server 21 of Fig. 14 (the data processing device 11 of Fig. 41) manages the chef and the recipe data (or cooking process data sets) in association with each other, using the blockchain technology for managing a transaction history of data as a ledger on a server (cloud server or edge server) in a distributed manner.

Next, in a case where the user wants the cooking robot 1 to cook using the recipe data, the user pays a use fee for the recipe data, thereby using the recipe data downloaded to the control device 12 for the cooking by the cooking robot 1, for example. Note that the use fee is gone back to the chef who is the creator of the recipe data, a data manager who manages the recipe data, and the like.

In this way, the recipe data (or cooking process data sets) can be efficiently managed as a creatively expressed work in consideration of the relationship among the chef, the user, and the use fee.

### - Characterization of ingredients using temperature change in absorption spectrum

Although the flavor of an ingredient is represented by the sensor data such as taste, aroma, and texture, the flavor may be represented by other indexes. A temperature change in an absorption spectrum can be used as an index for expressing the flavor of an ingredient.

### Principle

The absorption spectrum of a sample (ingredient) is measured using a spectrophotometer. The absorption spectrum changes depending on the temperature of the sample. The following reactions can be considered as the background of the change in the absorption spectrum with an increase in temperature.

### (1) Dissociation from association

An associative state of components contained in the sample (a state in which two or more molecules move like one molecule due to a weak bond between molecules) changes with temperature. When the temperature is low, the molecules tend to associate or aggregate, and conversely, when the temperature rises, molecular vibration becomes intense, so that the molecules tend to dissociate from the association. Therefore, a peak value of an absorption wavelength derived from the association decreases, and a peak value of an absorption wavelength derived from the dissociated single molecule increases.

### (2) Decomposition of molecules by thermal energy

By absorbing heat, a part with weak binding force comes off and the molecules are divided.

### (3) Decomposition of molecules by enzymatic activity

The molecules are divided via a degrading enzyme.

### (4) Redox

With an increase in temperature, pH of water drops (H+ concentration rises). In the case of fats and oils, an oxidation rate increases.

Here, from the viewpoint of the taste and aroma of natural products such as ingredients, of components contained in natural products, a taste substance is a component contained in a liquid phase, and an aroma substance is volatile and is a component contained in a gas phase.

Molecules in the associative state are less likely to enter the gas phase, and single molecules dissociated from the associative state are likely to transfer to the gas phase.

Moreover, for example, terpenes, which are deeply related to aroma, exist in plants in the form of glycosides with sugar, but become aglycone-free form without sugar by thermal decomposition or enzymatic decomposition, and easily volatilizes.

Therefore, as the temperature rises, the number of easily volatile molecules increases, the peak value of the absorption wavelength of the aroma substance on the verge of volatilization increases, and the peak value of the absorption wavelength associated with a molecular group to which the aroma substance has been associated by then decreases.

From this property, it can be considered that the temperature change of the absorption spectrum reflects the phase transition from the liquid phase related to "taste" to the gas phase related to "aroma".

Therefore, a target sample is kept warm at at least two or more different temperatures, the absorption spectra of the samples in respective heat-retaining states are measured, and the data set can be used as information that characterizes the taste and aroma of the sample. The samples can be identified from characteristics (patterns) of the absorption spectrum data set.

This takes into consideration the fact that there is a high probability that the phase transition from the liquid phase to the gas phase will occur as a result of dissociation from association of molecules or decomposition of molecules by thermal decomposition/enzymatic decomposition, and the temperature change of the absorption spectrum. It can be said that this method is a method of characterizing a sample by the absorption spectrum of three-dimensional data by adding dimension of temperature to the absorption spectrum represented as two-dimensional data of wavelength and absorbance.

### - Program

The series of processing described above can be executed by hardware or software. In a case where the series of processing is executed by software, a program constituting the software is installed in a computer incorporated in dedicated hardware, a general-purpose personal computer, or the like.

The program to be installed is recorded on and provided with the removable medium 211 illustrated in Fig. 19, which includes an optical disk (a compact disc-read only memory (CD-ROM), a digital versatile disc (DVD), or the like), a semiconductor memory, or the like. Further, the program may be provided via a wired or wireless transmission medium such as a local area network, the Internet, or digital broadcast. The program can be installed in the ROM 202 or the storage unit 208 in advance.

The program executed by the computer may be a program processed in chronological order according to the order described in the present specification or may be a program executed in parallel or at necessary timing such as when a call is made.

Note that, in this specification, the term "system" means a group of a plurality of configuration elements (devices, modules (parts), and the like), and whether or not all the configuration elements are in the same housing is irrelevant. Therefore, a plurality of devices housed in separate housings and connected via a network, and one device that houses a plurality of modules in one housing are both systems.

The effects described in this specification are merely examples and are not limited, and other effects may be exhibited.

Embodiments of the present technology are not limited to the above-described embodiments, and various modifications can be made without departing from the scope defined by the claims.

For example, in the present technology, a configuration of cloud computing in which one function is shared and processed in cooperation by a plurality of devices via a network can be adopted.

Furthermore, the steps described in the above-described flowcharts can be executed by one device or can be shared and executed by a plurality of devices.

Moreover, in a case where a plurality of processes is included in one step, the plurality of processes included in the one step can be executed by one device or can be shared and executed by a plurality of devices.

### REFERENCE SIGNS LIST

- 1: Cooking robot
- 11: Data processing device
- 12: Control device
- 21: Recipe data management server
- 41: Camera
- 42: Olfactory sensor
- 43: Gustatory sensor
- 51: Infrared sensor
- 52: Texture sensor
- 53: Environment sensor
- 221: Data processing unit
- 231: Cooking operation information generation unit
- 232: Flavor information generation unit
- 233: Recipe data generation unit
- 234: Environment information generation unit
- 235: Attribute information generation unit
- 236: Recipe data output unit
- 321: Cooking arm
- 361: Controller
- 401: Camera
- 402: Olfactory sensor
- 403: Gustatory sensor
- 404: Infrared sensor
- 405: Texture sensor
- 406: Environment sensor
- 407: Communication unit
- 501: Information processing unit
- 511: Recipe data acquisition unit
- 512: Recipe data analysis unit
- 513: Robot state estimation unit
- 514: Flavor information processing unit
- 515: Control unit
- 516: Command output unit

## Claims

1. A cooking robot (1) comprising:
a cooking arm (321) configured to perform a cooking operation for making a dish;
a control unit configured to control the cooking operation performed by the cooking arm using recipe data including a data set in which cooking operation data and sensation data are linked, the cooking operation data describing information regarding an ingredient of the dish and information regarding an operation of a cook in a cooking process using the ingredient, and the sensation data indicating a sensation of the cook measured in conjunction with a progress of the cooking process,
**characterised in that**
the sensation data comprises flavor information which is configured by gustatory information, the gustatory information being generated by a gustatory information neural network model which has performed learning using gustatory sensor data of the ingredient and the sensation of the cook upon eating the ingredient.

2. The cooking robot according to claim 1, wherein
the sensation data is data indicating at least one of a flavor of the ingredient before cooking, a flavor of the cooked ingredient cooked in the cooking process, and a flavor of the dish completed through all the cooking processes.

3. The cooking robot according to claim 2, wherein
the sensation data includes the gustatory information, the gustatory information indicating at least one of sweetness, sourness, saltiness, bitterness, umami, pungency, and astringency.

4. The cooking robot according to claim 2, further comprising:
a flavor measurement unit configured to measure at least one of the flavor of the ingredient cooked by the cooking operation performed by the cooking arm and the flavor of the dish completed by the cooking operation performed by the cooking arm.

5. The cooking robot according to claim 4, wherein
the flavor measurement unit measures at least one of a taste forming the flavor of the ingredient and a taste forming the flavor of the dish, and
the control unit causes the cooking arm to perform the cooking operation for taste adjustment so that the taste measured by the flavor measurement unit matches a taste represented by the sensation data.

6. The cooking robot according to claim 4, wherein
the sensation data includes texture information indicating at least one of a texture of the ingredient or a texture of the dish,
the flavor measurement unit measures at least one of a texture forming the flavor of the ingredient and a texture forming the flavor of the dish, and
the control unit causes the cooking arm to perform the cooking operation for texture adjustment so that the texture measured by the flavor measurement unit matches a texture represented by the sensation data.

7. The cooking robot according to claim 6, wherein
the texture information is information indicating at least one of stress, hardness, and water content measured by a sensor.

8. The cooking robot according to claim 1, wherein
the recipe data includes cooking environment data indicating an environment of a cooking space measured in conjunction with the progress of the cooking process,
the cooking robot further comprising:
an environment control unit configured to control an environment of an eating space where eating of the dish completed by the cooking operation performed by the cooking arm is performed so that the environment of the eating space matches the environment of the cooking space represented by the cooking environment data.

9. The cooking robot according to claim 8, wherein
the cooking environment data is data indicating at least one of temperature, humidity, atmospheric pressure, brightness, hue, and saturation of the cooking space.

10. The cooking robot according to claim 1, wherein
the recipe data includes food attribute information indicating at least one of an attribute of the ingredient before cooking, an attribute of the cooked ingredient cooked in the cooking process, and an attribute of the dish completed through all the cooking processes.

11. The cooking robot according to claim 1, wherein
a type and an amount of seasoning used in the cooking process are described in the cooking operation data, and
the recipe data includes seasoning attribute information indicating an attribute of the seasoning.

12. A control method comprising:
by a cooking robot (1) including a cooking arm (321) that performs a cooking operation for making a dish,
controlling the cooking operation performed by the cooking arm using recipe data including a data set in which cooking operation data and sensation data are linked, the cooking operation data describing information regarding an ingredient of the dish and information regarding an operation of a cook in a cooking process using the ingredient, and the sensation data indicating a sensation of the cook measured in conjunction with a progress of the cooking process,
wherein the sensation data comprises flavor information which is configured by gustatory information, the gustatory information being generated by a gustatory information neural network model which has performed learning using gustatory sensor data of the ingredient and the sensation of the cook upon eating the ingredient.

13. A cooking robot control device (12) comprising:
a control unit configured to control, via a network (13), a cooking operation performed by a cooking arm (321) included in a cooking robot (1), using recipe data including a data set in which cooking operation data and sensation data are linked, the cooking operation data describing information regarding an ingredient of a dish and information regarding an operation of a cook in a cooking process using the ingredient, and the sensation data indicating a sensation of the cook measured in conjunction with a progress of the cooking process,
**characterised in that**
the sensation data comprises flavor information which is configured by gustatory information, the gustatory information being generated by a gustatory information neural network model which has performed learning using gustatory sensor data of the ingredient and the sensation of the cook upon eating the ingredient.

14. A control method comprising:
by a cooking robot control device (12),
controlling, via a network (13), a cooking operation performed by a cooking arm (321) included in a cooking robot (1), using recipe data including a data set in which cooking operation data and sensation data are linked, the cooking operation data describing information regarding an ingredient of a dish and information regarding an operation of a cook in a cooking process using the ingredient, and the sensation data indicating a sensation of the cook measured in conjunction with a progress of the cooking process,
wherein the sensation data comprises flavor information which is configured by gustatory information, the gustatory information being generated by a gustatory information neural network model which has performed learning using gustatory sensor data of the ingredient and the sensation of the cook upon eating the ingredient.

## Patentansprüche

1. Kochroboter (1), umfassend:
einen Kocharm (321), der dazu ausgelegt ist, einen Kochvorgang zum Herstellen eines Gerichts durchzuführen;
eine Steuereinheit, die dazu ausgelegt ist, den durch den Kocharm durchgeführten Kochvorgang unter Verwendung von Rezeptdaten zu steuern, die einen Datensatz beinhalten, in dem Kochvorgangsdaten und Empfindungsdaten verknüpft sind, wobei die Kochvorgangsdaten Informationen bezüglich einer Zutat des Gerichts und Informationen bezüglich eines Vorgangs eines Kochs in einem Kochprozess unter Verwendung der Zutat beschreiben, und die Empfindungsdaten eine Empfindung des Kochs angeben, die in Verbindung mit einem Fortschritt des Kochprozesses gemessen wird,
**dadurch gekennzeichnet, dass**
die Empfindungsdaten Aromainformationen umfassen, die durch Geschmacksinformationen ausgelegt sind, wobei die Geschmacksinformationen durch ein neuronales Netzwerkmodell für Geschmacksinformationen erzeugt werden, das ein Lernen unter Verwendung von Geschmackssensordaten der Zutat und der Empfindung des Kochs beim Verzehr der Zutat durchgeführt hat.

2. Kochroboter nach Anspruch 1, wobei
die Empfindungsdaten Daten sind, die ein Aroma der Zutat vor dem Kochen und/oder ein Aroma der gekochten Zutat während des Kochprozesses und/oder ein Aroma des durch alle Kochprozesse fertiggestellten Gerichts angeben.

3. Kochroboter nach Anspruch 2, wobei
die Empfindungsdaten die Geschmacksinformationen beinhalten, wobei die Geschmacksinformationen Süße und/oder Säure und/oder Salzigkeit und/oder Bitterkeit und/oder Umami und/oder Schärfe und/oder Adstringenz angeben.

4. Kochroboter nach Anspruch 2, ferner umfassend:
eine Aromamesseinheit, die dazu ausgelegt ist, das Aroma der Zutat, die durch den vom Kocharm durchgeführten Kochvorgang gekocht wird, und/oder das Aroma des durch den vom Kocharm durchgeführten Kochvorgang fertiggestellten Gerichts zu messen.

5. Kochroboter nach Anspruch 4, wobei die Aromamesseinheit mindestens einen von einem Geschmack, der das Aroma der Zutat bildet, und einem Geschmack, der das Aroma des Gerichts bildet, misst, und
die Steuereinheit den Kocharm veranlasst, den Kochvorgang zur Geschmackseinstellung so durchzuführen, dass der von der Aromamesseinheit gemessene Geschmack einem durch die Empfindungsdaten angeglichenen Geschmack entspricht.

6. Kochroboter nach Anspruch 4, wobei
die Empfindungsdaten Beschaffenheitsinformationen beinhalten, die die Beschaffenheit der Zutat und/oder die Beschaffenheit des Gerichts angeben,
die Aromamesseinheit die Beschaffenheit, die das Aroma der Zutat bildet, und/oder die Beschaffenheit, die das Aroma des Gerichts bildet, misst, und
die Steuereinheit den Kocharm veranlasst, den Kochvorgang zur Beschaffenheitsanpassung so durchzuführen, dass die von der Aromamesseinheit gemessene Beschaffenheit mit einer durch die Empfindungsdaten repräsentierten Beschaffenheit übereinstimmt.

7. Kochroboter nach Anspruch 6, wobei
die Beschaffenheitsinformationen Informationen sind, die eine Spannung und/oder eine Härte und/oder einen von einem Sensor gemessenen Wassergehalt angeben.

8. Kochroboter nach Anspruch 1, wobei
die Rezeptdaten Kochumgebungsdaten beinhalten, die eine in Verbindung mit dem Fortschritt des Kochprozesses gemessene Umgebung eines Kochraums angeben,
wobei der Kochroboter ferner umfasst:
eine Steuereinheit für die Umgebung, die dazu ausgelegt ist, eine Umgebung eines Essraums zu steuern, in dem das Verzehren des Gerichts, das durch den von dem Kocharm durchgeführten Kochvorgang fertiggestellt wurde, so durchgeführt wird, dass die Umgebung des Essraums mit der durch die Kochumgebungsdaten repräsentierten Umgebung des Kochraums übereinstimmt.

9. Kochroboter nach Anspruch 8, wobei
die Kochumgebungsdaten Daten sind, die Temperatur und/oder Feuchtigkeit und/oder Luftdruck und/oder Helligkeit und/oder Farbton und/oder Ausnutzung des Kochraums angeben.

10. Kochroboter nach Anspruch 1, wobei
die Rezeptdaten Informationen über Lebensmittelattribute beinhalten, die ein Attribut der Zutat vor dem Kochen und/oder ein Attribut der gekochten Zutat während des Kochprozesses und/oder ein Attribut des durch alle Kochprozesse fertiggestellten Gerichts angeben.

11. Kochroboter nach Anspruch 1, wobei
eine Art und eine Menge der im Kochprozess verwendeten Gewürze in den Kochvorgangsdaten beschrieben werden, und die Rezeptdaten Informationen über Gewürzattribute beinhalten, die ein Attribut des Gewürzes angeben.

12. Steuerverfahren, umfassend:
durch einen Kochroboter (1), der einen Kocharm (321) beinhaltet, der einen Kochvorgang zum Herstellen eines Gerichts durchführt,
Steuern des durch den Kocharm durchgeführten Kochvorgang unter Verwendung von Rezeptdaten, die einen Datensatz beinhalten, in dem Kochvorgangsdaten und Empfindungsdaten verknüpft sind, wobei die Kochvorgangsdaten Informationen bezüglich einer Zutat des Gerichts und Informationen bezüglich eines Vorgangs eines Kochs in einem Kochprozess unter Verwendung der Zutat beschreiben, und die Empfindungsdaten eine Empfindung des Kochs angeben, die in Verbindung mit einem Fortschritt des Kochprozesses gemessen wird,
wobei die Empfindungsdaten Aromainformationen umfassen, die durch Geschmacksinformationen ausgelegt sind, wobei die Geschmacksinformationen durch ein neuronales Netzwerkmodell für Geschmacksinformationen erzeugt werden, das ein Lernen unter Verwendung von Geschmackssensordaten der Zutat und der Empfindung des Kochs beim Verzehr der Zutat durchgeführt hat.

13. Kochroboter-Steuerungsvorrichtung (12), umfassend:
eine Steuereinheit, die dazu ausgelegt ist, über ein Netzwerk (13) einen Kochvorgang zu steuern, der von einem Kocharm (321) durchgeführt wird, der in einem Kochroboter (1) beinhaltet ist, unter Verwendung von Rezeptdaten, die einen Datensatz beinhalten, in dem Kochvorgangsdaten und
Empfindungsdaten verknüpft sind, wobei die Kochvorgangsdaten Informationen bezüglich einer Zutat des Gerichts und Informationen bezüglich eines Vorgangs eines Kochs in einem Kochprozess unter Verwendung der Zutat beschreiben, und die Empfindungsdaten eine Empfindung des Kochs angeben, die in Verbindung mit einem Fortschritt des Kochprozesses gemessen wird,
**dadurch gekennzeichnet, dass**
die Empfindungsdaten Aromainformationen umfassen, die durch Geschmacksinformationen ausgelegt sind, wobei die Geschmacksinformationen durch ein neuronales Netzwerkmodell für Geschmacksinformationen erzeugt werden, das ein Lernen unter Verwendung von Geschmackssensordaten der Zutat und der Empfindung des Kochs beim Verzehr der Zutat durchgeführt hat.

14. Steuerverfahren, umfassend:
durch eine Kochroboter-Steuerungsvorrichtung (12),
über ein Netzwerk (13), Steuern eines Kochvorgangs, der von einem Kocharm (321) durchgeführt wird, der in einem Kochroboter (1) beinhaltet ist, unter Verwendung von Rezeptdaten, die einen Datensatz beinhalten, in dem Kochvorgangsdaten und Empfindungsdaten verknüpft sind, wobei die Kochvorgangsdaten Informationen bezüglich einer Zutat des Gerichts und Informationen bezüglich eines Vorgangs eines Kochs in einem Kochprozess unter Verwendung der Zutat beschreiben, und die Empfindungsdaten eine Empfindung des Kochs angeben, die in Verbindung mit einem Fortschritt des Kochprozesses gemessen wird,
wobei die Empfindungsdaten Aromainformationen umfassen, die durch Geschmacksinformationen ausgelegt sind, wobei die Geschmacksinformationen durch ein neuronales Netzwerkmodell für Geschmacksinformationen erzeugt werden, das ein Lernen unter Verwendung von Geschmackssensordaten der Zutat und der Empfindung des Kochs beim Verzehr der Zutat durchgeführt hat.

## Revendications

1. Robot de cuisson (1) comprenant :
un bras de cuisson (321) configuré pour effectuer une opération de cuisson pour réaliser un plat ;
une unité de contrôle configurée pour contrôler l'opération de cuisson effectuée par le bras de cuisson en utilisant des données de recette comprenant un ensemble de données dans lequel des données d'opérations de cuisson et des données de sensations sont liées, les données d'opérations de cuisson décrivant des informations concernant un ingrédient du plat et des informations concernant une opération d'une cuisson dans un processus de cuisson en utilisant l'ingrédient, et les données de sensations indiquant une sensation de la cuisson mesurée conjointement avec un avancement du processus de cuisson,
**caractérisé en ce que**
les données de sensations comprennent des informations sur l'arôme qui sont configurées par des informations gustatives, les informations gustatives étant générées par un modèle de réseau neuronal d'informations gustatives qui a effectué un apprentissage en utilisant des données de capteur gustatives de l'ingrédient et la sensation de la cuisson lors de la consommation de l'ingrédient.

2. Robot de cuisson selon la revendication 1, dans lequel
les données de sensations sont des données indiquant au moins un arôme parmi un arôme de l'ingrédient avant la cuisson, un arôme de l'ingrédient cuisiné qui est cuisiné selon le processus de cuisson et un arôme du plat exécuté par l'intermédiaire de tous les processus de cuisson.

3. Robot de cuisson selon la revendication 2, dans lequel
les données de sensations comprennent les informations gustatives, les informations gustatives indiquant au moins un élément parmi la sucrosité, l'acidité, la salinité, l'amertume, l'umami, le piquant et l'astringence.

4. Robot de cuisson selon la revendication 2, comprenant en outre :
une unité de mesure d'arôme configurée pour mesurer au moins un arôme parmi l'arôme de l'ingrédient cuisiné par l'opération de cuisson effectuée par le bras de cuisson et l'arôme du plat exécuté par l'opération de cuisson effectuée par le bras de cuisson.

5. Robot de cuisson selon la revendication 4, dans lequel
l'unité de mesure d'arôme mesure au moins un goût parmi un goût formant l'arôme de l'ingrédient et un goût formant l'arôme du plat, et
l'unité de contrôle amène le bras de cuisson à effectuer l'opération de cuisson pour un réglage du goût de sorte que le goût mesuré par l'unité de mesure d'arôme corresponde à un goût représenté par les données de sensations.

6. Robot de cuisson selon la revendication 4, dans lequel
les données de sensations comprennent des informations de texture indiquant au moins une d'une texture de l'ingrédient ou d'une texture du plat,
l'unité de mesure d'arôme mesure au moins une d'une texture formant l'arôme de l'ingrédient et d'une texture formant l'arôme du plat, et
l'unité de contrôle amène le bras de cuisson à effectuer l'opération de cuisson pour un ajustement de texture de sorte que la texture mesurée par l'unité de mesure d'arôme corresponde à une texture représentée par les données de sensations.

7. Robot de cuisson selon la revendication 6, dans lequel
les informations de texture sont des informations indiquant au moins une d'une contrainte, d'une dureté et d'une teneur en eau mesurée par un capteur.

8. Robot de cuisson selon la revendication 1, dans lequel
les données de recette comprennent des données d'environnement de cuisson indiquant un environnement d'un espace de cuisson mesuré conjointement avec l'avancement du processus de cuisson,
le robot de cuisson comprenant en outre :
une unité de contrôle d'environnement configurée pour contrôler un environnement d'un espace de consommation où la consommation du plat exécuté par l'opération de cuisson effectuée par le bras de cuisson est effectuée de sorte que l'environnement de l'espace de consommation corresponde à l'environnement de l'espace de cuisson représenté par les données d'environnement de cuisson.

9. Robot de cuisson selon la revendication 8, dans lequel
les données d'environnement de cuisson sont des données indiquant au moins un élément parmi la température, l'humidité, la pression atmosphérique, la luminosité, la teinte et la saturation de l'espace de cuisson.

10. Robot de cuisson selon la revendication 1, dans lequel
les données de recette comprennent des informations d'attributs de nourriture indiquant au moins un d'un attribut de l'ingrédient avant la cuisson, d'un attribut de l'ingrédient cuisiné qui est cuisiné dans le processus de cuisson et d'un attribut du plat exécuté par l'intermédiaire de tous les processus de cuisson.

11. Robot de cuisson selon la revendication 1, dans lequel
un type et une quantité d'assaisonnements utilisés dans le processus de cuisson sont décrits dans les données d'opérations de cuisson, et
les données de recette comprennent des informations d'attributs d'assaisonnements indiquant un attribut de l'assaisonnement.

12. Procédé de contrôle comprenant :
par un robot de cuisson (1) incluant un bras de cuisson (321) qui effectue une opération de cuisson pour réaliser un plat,
le contrôle de l'opération de cuisson effectuée par le bras de cuisson en utilisant des données de recette comprenant un ensemble de données dans lequel des données d'opérations de cuisson et des données de sensations sont liées, les données d'opérations de cuisson décrivant des informations concernant un ingrédient du plat et des informations concernant une opération d'une cuisson dans un processus de cuisson en utilisant l'ingrédient, et les données de sensations indiquant une sensation de la cuisson mesurée conjointement avec un avancement du processus de cuisson,
dans lequel les données de sensations comprennent des informations sur l'arôme qui sont configurées par des informations gustatives, les informations gustatives étant générées par un modèle de réseau neuronal d'informations gustatives qui a effectué un apprentissage en utilisant des données de capteur gustatives de l'ingrédient et la sensation de la cuisson lors de la consommation de l'ingrédient.

13. Dispositif de contrôle de robot de cuisson (12) comprenant :
une unité de contrôle configurée pour contrôler, via un réseau (13), une opération de cuisson effectuée par un bras de cuisson (321) compris dans un robot de cuisson (1), l'utilisation des données de recette comprenant un ensemble de données dans lequel des données d'opérations de cuisson et des données de sensations sont liées, les données d'opérations de cuisson décrivant des informations concernant un ingrédient d'un plat et des informations concernant une opération d'une cuisson dans un processus de cuisson en utilisant l'ingrédient, et les données de sensations indiquant une sensation de la cuisson mesurée conjointement avec un avancement du processus de cuisson,
**caractérisé en ce que**
les données de sensations comprennent des informations sur l'arôme qui sont configurées par des informations gustatives, les informations gustatives étant générées par un modèle de réseau neuronal d'informations gustatives qui a effectué un apprentissage en utilisant des données de capteur gustatives de l'ingrédient et la sensation de la cuisson lors de la consommation de l'ingrédient.

14. Procédé de contrôle comprenant :
par un dispositif de contrôle de robot de cuisson (12),
le contrôle, via un réseau (13), d'une opération de cuisson effectuée par un bras de cuisson (321) compris dans un robot de cuisson (1), l'utilisation des données de recette comprenant un ensemble de données dans lequel des données d'opérations de cuisson et des données de sensations sont liées, les données d'opérations de cuisson décrivant des informations concernant un ingrédient d'un plat et des informations concernant une opération d'une cuisson dans un processus de cuisson en utilisant l'ingrédient, et les données de sensations indiquant une sensation de la cuisson mesurée conjointement avec un avancement du processus de cuisson,
dans lequel les données de sensations comprennent des informations sur l'arôme qui sont configurées par des informations gustatives, les informations gustatives étant générées par un modèle de réseau neuronal d'informations gustatives qui a effectué un apprentissage en utilisant des données de capteur gustatives de l'ingrédient et la sensation de la cuisson lors de la consommation de l'ingrédient.
